# EUROPÄISCHE PATENTANMELDUNG

(11) **EP 1 942 685 A1**
(43) Veröffentlichungstag der Anmeldung: **09.07.2008**
(21) Anmeldenummer: 07006597.4
(22) Anmeldetag: 29.03.2007
(51) Int. Cl.: H04Q 7/22

(54) **Verfahren und Einrichtungen für die Übertragung einer Kurznachricht über ein IMS-Netzwerk**

(30) Priorität: 08.01.2007 EP 07000286
(71) Anmelder: Siemens Networks GmbH & Co. KG, 81541 München (DE)
(72) Erfinder: Wiehe, Ulrich, 36251 Bad Hersfeld (DE)
(74) Vertreter: Maier, Daniel Oliver

(57) **Zusammenfassung**

Die Erfindung betrifft ein Verfahren zur Kurznachrichtenzustellung,
gemäß welchem bei Registrierung eines IP-SM-GW im HSS das HSS prüft, ob wartende Nachrichtendaten vorhanden sind,
wobei in diesem Fall ein oder mehrere Kurznachrichtenzentren alarmiert werden, und das HSS (oder HLR) die IMSI des Teilnehmers in der Nachricht "AnyTimeModification ack" zum IP-SM-GW sendet,
und dieses dann mit Hilfe der IMSI die eintreffende Kurznachricht dem Teilnehmer zuordnet.

## Beschreibung

In Telekommunikationsnetzen (insbesondere Mobilfunknetzen basierend auf dem 3GPP UMTS Standard) werden Kurznachrichten (short messages) von einem Short Message Service Centre (SMSC), kurz Service Centre (SC), über verschiedene Wege dem Teilnehmer zugestellt: 1. über ein Mobile services Switching Centre (MSC) (entspricht der Circuit Switched (CS)-domain); 2. über ein Serving GPRS Support Node (SGSN) (entspricht der Packet Switched (PS)-domain). Ein dritter Weg über einen generischen 3GPP IP Access (IMS = Internet Protocol (IP) Multimedia Subsystem) wird in der Technischen Spezifikation 3GPP TS 23.204 beschrieben (aktuelle Version ist 7.0.0). Das in dieser Spezifikation beschriebene Verfahren der Zustellung von Kurznachrichten ist jedoch teilweise umständlich und unvollständig. Diese Erfindung schlägt eine Vereinfachung und Vervollständigung des Verfahrens der Kurznachrichten Zustellung über den dritten Weg (IMS) vor.

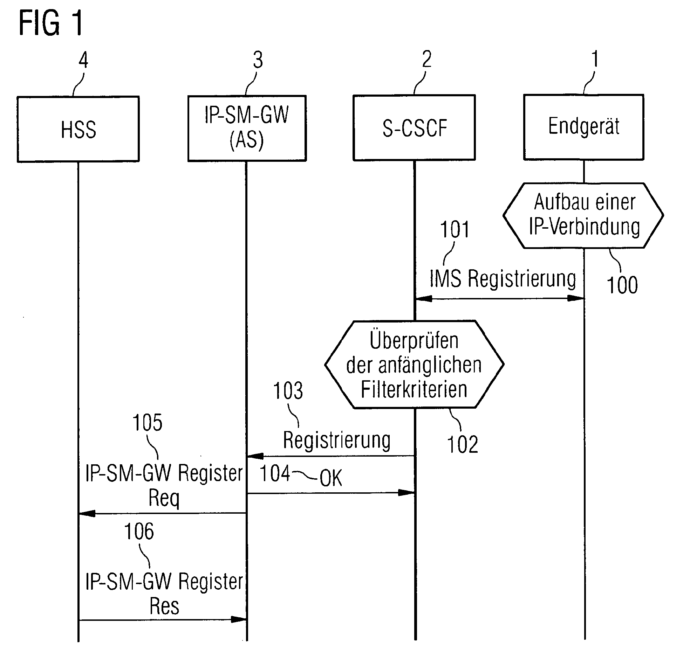

Der bisher bekannte Stand der Technik wird in 3GPP TS 23.204, Version 7.0.0, beschrieben. Das dort offenbarte Verfahren wird im Folgenden mit Bezug auf die Figuren 1 - 3 dargestellt.

Bei dem Verfahren nach dem Stand der Technik spielen folgende Einrichtungen eine Rolle: ein Endgerät (User Equipment (UE)), eine S-CSCF-Einrichtung (S-CSCF = Serving-Call Server Control Function), eine IP-SM-GW-Einrichtung (IP-SM-GW = Internet Protocol - Short Message - Gateway), wobei die IP-SM-GW-Einrichtung als eine Art Application Server (AS) fungiert, eine HSS-Einrichtung (HSS = Home Subscriber Service) und eine SC-Einrichtung (SC = Service Centre).

Fig. 1 stellt die Registrierung eines Endgeräts nach dem Verfahren des Stands der Technik dar, so wie es in Abschnitt 6.1 des Dokuments TS 23.204 offenbart ist. In Schritt 100 baut das Endgerät 1 eine IP-Verbindung (Internet Protocol Verbindung) mit dem IP-Multimedia Subsystem (IMS) auf. In Schritt 101 registriert sich das Endgerät 1 bei der S-CSCF-Einrichtung 2 gemäß dem IMS-Registrierungsverfahren. Aus Gründen der Einfachheit sind nicht alle Nachrichten zwischen dem Endgerät 1 und der S-CSCF-Einrichtung 2 und zwischen der S-CSCF-Einrichtung 2 und der HSS-Einrichtung 4 im Detail gezeigt. Zusätzlich werden eine darüber hinaus vorhandene I-CSCF-Einrichtung und eine P-CSCF-Einrichtung nicht gezeigt.

In Schritt 102 überprüft die S-CSCF-Einrichtung 2 die anfänglichen Filterkriterien, die sie während des IMS-Registrierungsverfahrens von der HSS-Einrichtung 4 empfängt. Nach einer erfolgreichen IMS-Registrierung und basierend auf den empfangenen anfänglichen Filterkriterien informiert die S-CSCF-Einrichtung 2 die IP-SM-GW-Einrichtung 3 über die Registrierung des Nutzers in Schritt 103. Die IP-SM-GW-Einrichtung 3 antwortet an die S-CSCF-Einrichtung 2 mit einem OK in Schritt 104.

In Schritt 105 sendet die IP-SM-GW-Einrichtung 3 eine "IP-SM-GW-Register-Request"-Nachricht an die HSS-Einrichtung 4. Die HSS-Einrichtung 4 speichert die empfangenen Informationen und antwortet an die IP-SM-GW-Einrichtung 3 mit einer "IP-SM-GW-Register-Response"-Nachricht, die Subskriptionsdaten beinhaltet, die für die Bereitstellung von Diensten benötigt werden.

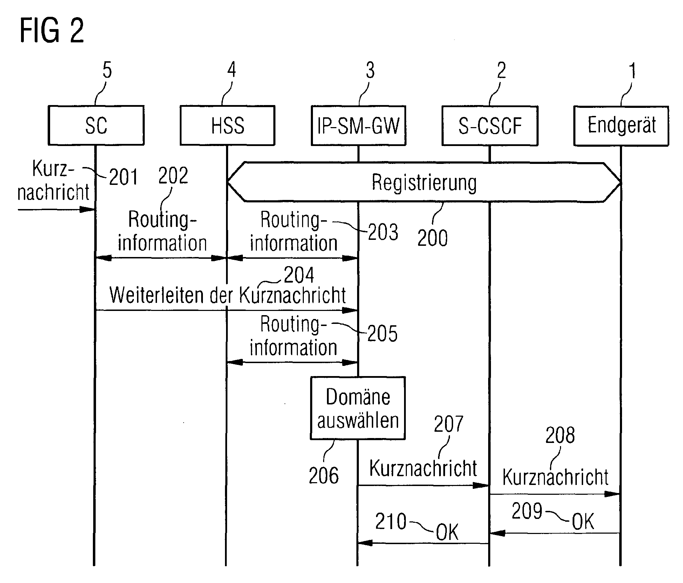

Fig. 2 stellt dar, wie nach erfolgreicher Registrierung 200, die dem Verfahren nach Fig. 1 entspricht, eine Kurznachricht von einer SC-Einrichtung 5 an das Endgerät 1 ausgeliefert wird (vgl. Abschnitt 6.4 des Dokuments TS 23.204). In Schritt 201 erhält die SC-Einrichtung 5 eine Kurznachricht, beispielsweise von einem im Mobilfunknetz befindlichen mobilen Endgerät. Die SC-Einrichtung 5 erfragt in Schritt 202 bei der HSS-Einrichtung 4 Routinginformationen. Die HSS-Einrichtung 4 leitet diese Anfrage an die IP-SM-GW-Einrichtung 3 weiter in Schritt 203. Im selben Schritt gibt die IP-SM-GW-Einrichtung 3 ihre eigene Adresse an die SC-Einrichtung 5 zurück.

In Schritt 204 leitet die SC-Einrichtung 5 die Kurznachricht an die durch die erhaltene Adresse identifizierte IP-SM-GW-Einrichtung 3 weiter, und zwar nach demselben Verfahren, das für eine Auslieferung an eine MSC-Einrichtung (MSC = Mobile Services Switching Centre) oder eine SGSN-Einrichtung (SGSN = Serving GPRS Support Note) verwendet werden würde.

In Schritt 205 ermittelt die IP-SM-GW-Einrichtung 3 bei der HSS-Einrichtung 4 den Empfänger der Kurznachricht mit Hilfe eines Korrelationsidentifikators innerhalb des IMSI-Felds (IMSI = International Mobile Subscriber Identity) der weitergeleiteten Kurznachricht und erfragt bei der HSS-Einrichtung Routinginformationen, um eine Adresse für die Weiterleitung der Kurznachricht zu erhalten.

In Schritt 206 wählt die IP-SM-GW-Einrichtung 3 eine Domäne aus, über die die Kurznachricht ausgeliefert werden soll, gemäß der Politik des Netzwerkbetreibers und der Nutzerpräferenzen. Die Auswahllogik für die bevorzugte Auslieferungsroute der Kurznachricht ist FFS.

In Schritt 207 sendet die IP-SM-GW-Einrichtung 3 die Kurznachricht an die S-CSCF-Einrichtung 2 mit Hilfe einer TEL-URI, die mit der IMSI verknüpft ist, um so die Kurznachricht an die S-CSCF-Einrichtung 2 mittels des entsprechenden SIP-Verfahrens (SIP = Session Initiation Protocol) weiterzuleiten.

In Schritt 208 leitet die S-CSCF-Einrichtung 2 die Kurznachricht an das Endgerät 1 weiter. Das Endgerät 1 antwortet mit einer OK-Nachricht an die S-CSCF-Einrichtung 2 in Schritt 209. Die S-CSCF-Einrichtung 2 sendet dann eine OK-Nachricht an die IP-SM-GW-Einrichtung 3 in Schritt 210.

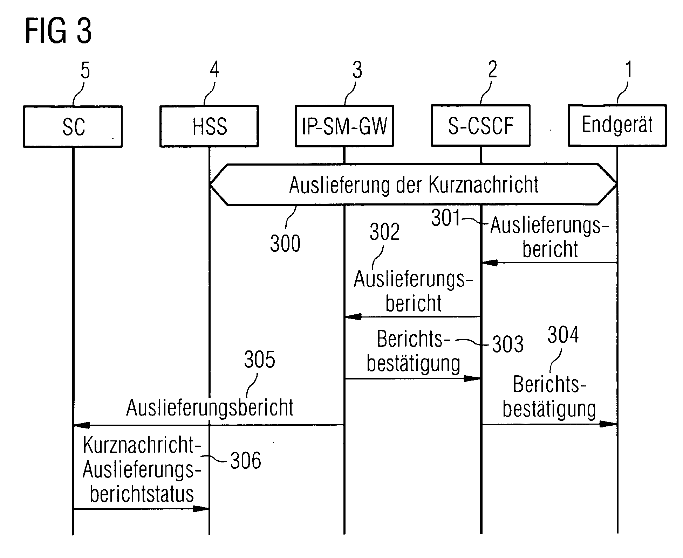

Fig. 3 stellt dar, wie bei dem Verfahren nach dem Stand der Technik ein Auslieferungsbericht verteilt wird, so wie es in Abschnitt 6.5 des Dokuments TS 23.204 offenbart ist. Schritt 300 symbolisiert die erfolgreiche Auslieferung einer Kurznachricht, so wie es in Fig. 2 dargestellt wurde. Nach der Auslieferung der Kurznachricht sendet das Endgerät 1 in Schritt 301 einen Auslieferungsbericht an die S-CSCF-Einrichtung 2. Dieser Auslieferungsbericht umfasst eine positive oder negative Bestätigung bezüglich der empfangenen Kurznachricht. In Schritt 302 leitet die S-CSCF-Einrichtung 2 den Auslieferungsbericht an die IP-SM-GW-Einrichtung 3 weiter. Dabei wird sichergestellt, dass der Auslieferungsbericht dieselbe IP-SM-GW-Einrichtung 3 erreicht, die auch die Kurznachricht weitergeleitet hat.

In Schritt 303 bestätigt die IP-SM-GW-Einrichtung 3 den Empfang des Auslieferungsberichts an die S-CSCF-Einrichtung 2. Die Berichtsbestätigung leitet die S-CSCF-Einrichtung an das Endgerät 1 weiter (Schritt 304). In Schritt 305 leitet die IP-SM-GW-Einrichtung 3 den Auslieferungsbericht an die SC-Einrichtung 5 weiter. Die SC-Einrichtung 5 sendet einen Kurznachrichtauslieferungsberichtsstatus an die HSS-Einrichtung 4 (Schritt 306). Die HSS-Einrichtung kann dadurch beispielsweise eine Kurznachrichtalarmierungsprozedur anstoßen, falls dies notwendig sein sollte.

Aufgabe der vorliegenden Erfindung ist es, das beschriebene Verfahren aus dem Stand der Technik zu verbessern oder zu erweitern. Eine weitere Aufgabe ist es, geeignet Einrichtungen bereitzustellen, um das verbesserte oder erweiterte Verfahren auszuführen.

Die Aufgabe wird jeweils durch die Gegenstände der unabhängigen Ansprüche gelöst. Vorteilhafte Ausgestaltungen und bevorzugte Ausführungsformen der Erfindung sind in den Unteransprüchen angegeben.

Insbesondere umfasst die Erfindung ein Verfahren für die Übertragung einer Kurznachricht über ein Netzwerk, wobei das Netzwerk ein Endgerät für das Senden und Empfangen einer Kurznachricht, wobei das Endgerät durch mindestens einen Nutzeridentifikator identifiziert wird, welcher sich auf einen Nutzer bezieht, der das Endgerät benutzt, eine S-CSCF-Einrichtung zum Empfangen und Weiterleiten einer Kurznachricht, mindestens eine SC-Einrichtung zum Empfangen und Weiterleiten einer Kurznachricht, eine IP-SM-GW-Einrichtung zum Weiterleiten einer Kurznachricht von der SC-Einrichtung an die S-CSCF-Einrichtung und/oder zum Weiterleiten einer Kurznachricht von der S-CSCF-Einrichtung an die SC-Einrichtung, und eine HSS-Einrichtung zum Registrieren von Kommunikationsendpunkten und zum Feststellen eines Kommunikationsendpunkts für die Weiterleitung einer Kurznachricht umfasst, wobei das Verfahren die Schritte umfasst Registrieren des mindestens einen Nutzeridentifikators, der das Endgerät identifiziert, bei der S-CSCF-Einrichtung, Registrieren der S-CSCF-Einrichtung bei der IP-SM-GW-Einrichtung, um der IP-SM-GW-Einrichtung zu ermöglichen, Kurznachrichten an das Endgerät zu liefern, das durch den mindestens einen Nutzeridentifikator identifiziert wird, der bei der S-CSCF-Einrichtung registriert ist, Registrieren bei der HSS-Einrichtung, dass das Endgerät, das durch den mindestens einen Nutzeridentifikator identifiziert ist, über die IP-SM-GW-Einrichtung erreichbar ist, Erhalten einer Kurznachricht auf der SC-Einrichtung, Weiterleiten der Kurznachricht von der SC-Einrichtung an die IP-SM-GW-Einrichtung, Weiterleiten der Kurznachricht von der IP-SM-GW-Einrichtung an die S-CSCF-Einrichtung und Weiterleiten der Kurznachricht von der S-CSCF-Einrichtung an das Endgerät.

Dieses Verfahren hat den Vorteil, dass eine Kurznachricht über das IMS an das Endgerät ausgeliefert werden kann.

Vorzugsweise umfasst das Verfahren die Schritte Feststellen, ob eine Kurznachricht, die an den mindestens einen Nutzeridentifikator adressiert ist, bereits im Netzwerk vorliegt, sobald bei der HSS-Einrichtung registriert wird, dass das Endgerät, das durch den mindestens einen Nutzeridentifikator identifiziert wird, über die IP-SM-GW-Einrichtung erreichbar ist, und Senden einer Anzeige an die mindestens eine SC-Einrichtung, wenn eine Kurznachricht, die an den mindestens einen Nutzeridentifikator adressiert ist, bereits im Netzwerk vorliegt.

Dies hat den Vorteil, dass automatisch überprüft wird, sobald sich ein Endgerät bei der HSS-Einrichtung registriert, ob für dieses Endgerät bereits Kurznachrichten im Netzwerk vorliegen. Diese Kurznachrichten können dann unverzüglich nach der Registrierung des Endgeräts im Netzwerk an das Endgerät ausgeliefert werden. Im Vergleich zum Stand der Technik können bereits wartende Kurznachrichten daher schneller an das Endgerät ausgeliefert werden.

Vorzugsweise umfasst das Verfahren die Schritte Senden einer Anfrage, einen zweiten Nutzeridentifikator, der das Endgerät identifiziert, zu ermitteln, basierend auf einem ersten Nutzeridentifikator, der das Endgerät identifiziert, von der IP-SM-GW-Einrichtung an die HSS-Einrichtung, Ermitteln des zweiten Nutzeridentifikators, basierend auf dem ersten Nutzeridentifikator auf der HSS-Einrichtung, und Senden des zweiten Nutzeridentifikators von der HSS-Einrichtung an die IP-SM-GW-Einrichtung.

Dies hat den Vorteil, dass nach der Ausführung der Schritte der IP-SM-GW-Einrichtung nicht nur der erste Nutzeridentifikator bekannt ist, sondern auch der zweite Nutzeridentifikator. Dies ist besonders dann vorteilhaft, wenn die IP-SM-GW-Einrichtung später eine Kurznachricht empfängt, die an den zweiten Nutzeridentifikator adressiert ist. Dann nämlich kann die IP-SM-GW-Einrichtung den ersten Nutzeridentifikator anhand des zweiten Nutzeridentifikators ermitteln.

Vorzugsweise umfasst das erfindungsgemäße Verfahren die Schritte Senden einer Anfrage, einen dritten Nutzeridentifikator zu ermitteln, der das Endgerät identifiziert, basierend auf dem zweiten Nutzeridentifikator, der das Endgerät identifiziert, von der IP-SM-GW-Einrichtung an die HSS-Einrichtung, Ermitteln des dritten Nutzeridentifikators, basierend auf dem zweiten Nutzeridentifikator auf der HSS-Einrichtung, und Senden des dritten Nutzeridentifikators von der HSS-Einrichtung an die IP-SM-GW-Einrichtung.

Dies hat den Vorteil, dass nach der Ausführung der Schritte der IP-SM-GW-Einrichtung nicht nur der zweite Nutzeridentifikator bekannt ist, sondern auch der dritte Nutzeridentifikator. Dadurch kann, wenn später eine Kurznachricht eintrifft, die an den dritten Nutzeridentifikator gerichtet ist, der zweite Nutzeridentifikator ermittelt werden, so dass die Kurznachricht an das durch den zweiten Nutzeridentifikator identifizierte Endgerät weitergeleitet werden kann.

In einer besonders vorteilhaften Ausführungsform umfasst das Verfahren den Schritt Speichern einer Relation zwischen dem ersten und dem dritten Nutzeridentifikator auf der IP-SM-GW-Einrichtung.

Dies hat den Vorteil, dass eine Kurznachricht, die an den dritten Nutzeridentifikator gerichtet ist, einfach an den ersten Nutzeridentifikator weitergeleitet werden kann. Dies ist möglich, weil die Kurznachricht den dritten Nutzeridentifikator beinhaltet und die IP-SM-GW-Einrichtung eine Relation zwischen dem ersten und dem dritten Nutzeridentifikator speichert.

Vorzugsweise umfasst das Verfahren die Schritte Empfangen einer Kurznachricht auf einer SC-Einrichtung, Senden einer Anfrage, eine Adresse zu empfangen, an welche die Kurznachricht weitergeleitet werden soll, um so die Kurznachricht an das Endgerät auszuliefern, von der SC-Einrichtung an die HSS-Einrichtung, Senden der erfragten Adresse von der HSS-Einrichtung an die SC-Einrichtung in Reaktion auf die Anfrage und Weiterleiten der Kurznachricht von der SC-Einrichtung an die erfragte Adresse.

Dadurch kann die SC-Einrichtung einfach erfragen, an welche Adresse die Kurznachricht weitergeleitet werden soll, um so die Kurznachricht der gewünschten Adresse zuzustellen.

In einer besonders vorteilhaften Ausführungsform umfasst das Verfahren die Schritte Empfangen einer Kurznachricht, die an den dritten Nutzeridentifikator adressiert ist, der das Endgerät identifiziert, auf der IP-SM-GW-Einrichtung, Ermitteln des ersten Nutzeridentifikators, der das Endgerät identifiziert, basierend auf dem dritten Nutzeridentifikator und der Relation zwischen dem ersten und dem dritten Nutzeridentifikator auf der IP-SM-GW-Einrichtung und Weiterleiten der Kurznachricht und des ersten Nutzeridentifikators von der IP-SM-GW-Einrichtung an die S-CSCF-Einrichtung.

Dies hat den Vorteil, dass eine Kurznachricht an den dritten Nutzeridentifikator adressiert sein kann, auch wenn eine Zustellung nur aufgrund des ersten Nutzeridentifikators möglich ist. In diesem Falle ermittelt die IP-SM-GW-Einrichtung basierend auf dem dritten Nutzeridentifikator und der Relation zwischen dem ersten und dem dritten Nutzeridentifikator einfach den ersten Nutzeridentifikator und leitet die Kurznachricht entsprechend an die S-CSCF-Einrichtung weiter.

In einer bevorzugten Ausführungsform umfasst das Verfahren den Schritt Senden von Daten, die eine nicht erfolgreiche Auslieferung einer Kurznachricht an das Endgerät anzeigen, von der S-CSCF-Einrichtung an die IP-SM-GW-Einrichtung.

Auf diese Weise wird es möglich, dass die IP-SM-GW-Einrichtung das Scheitern eines Auslieferungsversuchs mitgeteilt bekommt, so dass das Verfahren auf dieses Misslingen der Auslieferung der Kurznachricht angemessen reagieren kann.

Vorzugsweise umfasst das Verfahren den Schritt Senden von Daten, die eine nicht erfolgreiche Auslieferung einer Kurznachricht an das Endgerät anzeigen, von der IP-SM-GW-Einrichtung an die SC-Einrichtung.

Hierdurch ergibt sich der Vorteil, dass auch die SC-Einrichtung von dem Misslingen der Auslieferung der Kurznachricht erfährt und entsprechende Schritte einleiten kann.

Vorzugsweise umfasst das erfindungsgemäße Verfahren den Schritt Senden einer Anfrage, eine Überwachung der Erreichbarkeit des Endgeräts, das durch den mindestens einen Nutzeridentifikator identifiziert wird, zu aktivieren, von der IP-SM-GW-Einrichtung an die HSS-Einrichtung.

Auf diese Weise kann die IP-SM-GW-Einrichtung initiieren, dass ihr die Wiedererreichbarkeit des Endgeräts mitgeteilt wird, sobald das Endgerät wieder erreichbar ist.

In einer bevorzugten Ausführungsform umfasst das erfindungsgemäße Verfahren den Schritt Senden einer Anfrage, eine Überwachung einer Erreichbarkeit eines Endgeräts, das durch den mindestens einen Nutzeridentifikator identifiziert wird, zu aktivieren von der HSS-Einrichtung an die S-CSCF-Einrichtung.

Auf diese Weise kann die HSS-Einrichtung die S-CSCF-Einrichtung beauftragen, beispielsweise durch Übersendung spezieller Filterkriterien, zu überwachen, ob das Endgerät wieder erreichbar wird und im Falle der Wiedererreichbarkeit entsprechend zu reagieren, beispielsweise durch die Alarmierung der IP-SM-GW-Einrichtung.

Vorzugweise umfasst das erfindungsgemäße Verfahren den Schritt Senden von ersten Daten, die anzeigen, dass das Endgerät, das durch den mindestens einen Nutzeridentifikator identifiziert wird, erreichbar ist, wenn das Endgerät, das durch den mindestens einen Nutzeridentifikator identifiziert wird, erreichbar wird, von der S-CSCF-Einrichtung an die IP-SM-GW-Einrichtung.

Dieser Schritt hat den Vorteil, dass die S-CSCF-Einrichtung die IP-SM-GW-Einrichtung alarmieren kann, sobald das Endgerät wieder erreichbar wird.

In einer bevorzugten Ausführungsform umfasst das erfindungsgemäße Verfahren den Schritt Senden von zweiten Daten, die anzeigen, dass das Endgerät, das durch den mindestens einen Nutzeridentifikator identifiziert wird, erreichbar ist, von der IP-SM-GW-Einrichtung an die HSS-Einrichtung, beim Empfangen der ersten Daten auf der IP-SM-GW-Einrichtung.

Auf diese Weise kann die IP-SM-GW-Einrichtung die HSS-Einrichtung darüber informieren, dass das Endgerät wieder erreichbar ist. Die HSS-Einrichtung kann dann entsprechend reagieren, indem sie zum Beispiel bei Routing-Informations-Anfragen für die Auslieferung von Kurznachrichten nicht mehr die Adresse einer MSC-Einrichtung oder SGSN-Einrichtung, sondern die Adresse der IP-SM-GW-Einrichtung zurückgibt, so dass eine Auslieferung über das IMS bewirkt wird.

Vorzugsweise umfasst das erfindungsgemäße Verfahren den Schritt Senden von Daten, die anzeigen, dass das Endgerät, das durch den mindestens einen Nutzeridentifikator identifiziert wird, erreichbar ist, von der HSS-Einrichtung an die mindestens eine SC-Einrichtung, beim Empfangen der zweiten Daten auf der HSS-Einrichtung.

Auf diese Weise wird es möglich, dass die HSS-Einrichtung, sobald sie erfährt, dass das Endgerät wieder über das IMS erreichbar ist, die mindestens eine SC-Einrichtung alarmiert. Die SC-Einrichtungen können dann möglicherweise wartende Kurznachrichten unverzüglich nach Erhalt dieser Alarmierung an das wieder erreichbare Endgerät über das IMS ausliefern.

Vorzugsweise umfasst das erfindungsgemäße Verfahren den Schritt Senden einer Anfrage, die Überwachung der Erreichbarkeit eines Endgeräts, das durch den mindestens einen Nutzeridentifikator identifiziert wird, zu deaktivieren von der IP-SM-GW-Einrichtung an die HSS-Einrichtung.

Auf diese Weise wird es möglich, insbesondere im Falle der Deregistrierung des Endgeräts im IMS, die Überwachung der Erreichbarkeit des Endgeräts zu deaktivieren, so dass belegte Ressourcen wieder freigegeben werden können.

In einer bevorzugten Ausführungsform umfasst das erfindungsgemäße Verfahren den Schritt Senden einer Anfrage, die Überwachung der Erreichbarkeit eines Endgeräts, das durch den mindestens einen Nutzeridentifikator identifiziert wird, zu deaktivieren von der HSS-Einrichtung an die S-CSCF-Einrichtung.

Dies hat den Vorteil, dass auch die S-CSCF-Einrichtung von der Deaktivierung der Überwachung der Erreichbarkeit des Endgeräts erfährt und mit der Überwachung aufhören kann, so dass belegte Ressourcen freigegeben werden können.

In einer bevorzugten Ausführungsform umfasst das Verfahren den Schritt Senden von Daten, die eine nicht erfolgreiche Auslieferung einer Kurznachricht an das Endgerät, das durch den mindestens einen Nutzeridentifikator identifiziert wird, anzeigen, von der SC-Einrichtung an die HSS-Einrichtung.

Auf diese Weise erfährt auch die HSS-Einrichtung von der gescheiterten Auslieferung der Kurznachricht und kann entsprechend reagieren, beispielsweise indem sie überprüft, ob das entsprechende Endgerät über andere Wege erreichbar sein könnte.

Vorzugsweise umfasst das erfindungsgemäße Verfahren den Schritt Ermitteln bei Empfang der Daten, die eine nicht erfolgreiche Auslieferung anzeigen, auf der HSS-Einrichtung, ob ein Endgerät, das durch den mindestens einen Nutzeridentifikator identifiziert wird, erreichbar ist über eine MSC-Einrichtung und/oder eine SGSN-Einrichtung.

Dies hat den Vorteil, dass bei Nichterreichbarkeit des Endgeräts über das IMS überprüft wird, ob das Endgerät nicht über andere Wege, wie zum Beispiel die "Circuit Switched"-Domäne (über eine MSC-Einrichtung) oder die "Packet Switched"-Domäne (über eine SGSN-Einrichtung) erreichbar ist. Sollte das Endgerät auf anderem Weg erreichbar sein, könnten dann die entsprechenden Kurznachrichten über diesen anderen Weg zugestellt werden, so dass sich gegenüber dem reinen Warten auf die Wiedererreichbarkeit des Endgeräts über das IMS eine verkürzte Zeitdauer für die Zustellung der Kurznachrichten ergibt.

Vorzugsweise umfasst das erfindungsgemäße Verfahren den Schritt Senden von Daten, die anzeigen, dass das Endgerät, das durch den mindestens einen Nutzeridentifikator identifiziert wird, über eine MSC-Einrichtung und/oder eine SGSN-Einrichtung erreichbar ist, von der HSS-Einrichtung an die mindestens eine SC-Einrichtung, wenn das Endgerät erreichbar ist über eine MSC-Einrichtung und/oder eine SGSN-Einrichtung.

Auf diese Weise erfährt die mindestens eine SC-Einrichtung, dass das Endgerät über eine MSC-Einrichtung und/oder eine SGSN-Einrichtung erreichbar ist, so dass die mindestens eine SC-Einrichtung entsprechend reagieren kann. Die mindestens eine SC-Einrichtung kann zum Beispiel die Auslieferung der wartenden Kurznachricht über die entsprechende MSC-Einrichtung und/oder die entsprechende SGSN-Einrichtung anstoßen.

In einer bevorzugten Ausführungsform umfasst das Verfahren die Schritte Deregistrieren der S-CSCF-Einrichtung bei der IP-SM-GW-Einrichtung, Senden einer Anfrage, die Überwachung der Erreichbarkeit eines Endgeräts, das durch den mindestens einen Nutzeridentifikator identifiziert wird, zu deaktivieren von der IP-SM-GW-Einrichtung an die HSS-Einrichtung und Senden einer Anfrage, die Überwachung der Erreichbarkeit eines Endgeräts, das durch den mindestens einen Nutzeridentifikator identifiziert wird, zu deaktivieren von der HSS-Einrichtung an die S-CSCF-Einrichtung.

Auf diese Weise ergibt sich der Vorteil, dass die Erreichbarkeit des Endgeräts über das IMS deregistriert werden kann. Im Zuge der Deregistrierung kann die S-CSCF-Einrichtung bei der IP-SM-GW-Einrichtung deregistriert werden und die Überwachung der Erreichbarkeit des Endgeräts über das IMS wird deaktiviert, so dass die entsprechenden Ressourcen freigegeben werden können.

Weiterhin umfasst die Erfindung eine S-CSCF-Einrichtung, die für die Ausführung von Schritten des erfindungsgemäßen Verfahrens eingerichtet ist. Insbesondere wird die S-CSCF-Einrichtung zum Empfangen und Weiterleiten einer Kurznachricht bereitgestellt.

Erfindungsgemäß umfasst die S-CSCF-Einrichtung Mittel zum Registrieren mindestens eines Nutzeridentifikators, der ein Endgerät identifiziert, Mittel zum Registrieren der S-CSCF-Einrichtung bei einer IP-SM-GW-Einrichtung, um der IP-SM-GW-Einrichtung zu ermöglichen, Kurznachrichten an ein Endgerät zu liefern, das durch den mindestens einen Nutzeridentifikator identifiziert wird, der bei der S-CSCF-Einrichtung registriert ist, Mittel zum Empfangen einer Kurznachricht und Mittel zum Weiterleiten der Kurznachricht von der S-CSCF-Einrichtung an das Endgerät.

Auf diese Weise wird der S-CSCF-Einrichtung ermöglicht, ihre entsprechende Rolle im erfindungsgemäßen Verfahren einzunehmen.

Vorzugsweise umfasst die S-CSCF-Einrichtung Mittel zum Senden von Daten, die eine nicht erfolgreiche Auslieferung einer Kurznachricht an das Endgerät anzeigen, von der S-CSCF-Einrichtung an die IP-SM-GW-Einrichtung.

Dies hat den Vorteil, dass die S-CSCF-Einrichtung die IP-SM-GW-Einrichtung über gescheiterte Auslieferungsversuche von Kurznachrichten informieren kann, so dass die IP-SM-GW-Einrichtung entsprechend reagieren kann.

Vorzugsweise umfasst die S-CSCF-Einrichtung Mittel zum Empfangen einer Anfrage, eine Überwachung einer Erreichbarkeit eines Endgeräts, das durch den mindestens einen Nutzeridentifikator identifiziert wird, zu aktivieren.

Dadurch kann die S-CSCF-Einrichtung Überwachungsanfragen bezüglich der Erreichbarkeit von Endgeräten empfangen, so dass die S-CSCF-Einrichtung entsprechend reagieren kann, wie zum Beispiel durch die Aktivierung von entsprechenden Filterkriterien.

In einer bevorzugten Ausführungsform umfasst die erfindungsgemäße S-CSCF-Einrichtung Mittel zum Senden von ersten Daten, die anzeigen, dass das Endgerät, das durch den mindestens einen Nutzeridentifikator identifiziert wird, erreichbar ist, wenn das Endgerät, das durch den mindestens einen Nutzeridentifikator identifiziert wird, erreichbar wird, von der S-CSCF-Einrichtung an die IP-SM-GW-Einrichtung.

Dies hat den Vorteil, dass die S-CSCF-Einrichtung die IP-SM-GW-Einrichtung alarmieren kann, wenn das Endgerät über IMS wieder erreichbar wird.

Vorzugsweise umfasst die erfindungsgemäße S-CSCF-Einrichtung Mittel zum Empfangen einer Anfrage, die Überwachung der Erreichbarkeit eines Endgeräts, das durch den mindestens einen Nutzeridentifikator identifiziert wird, zu deaktivieren.

Hierdurch wird es möglich, dass die Überwachung der Erreichbarkeit von Endgeräten wieder deaktiviert wird, so dass entsprechend belegte Ressourcen wieder freigegeben werden können.

Vorzugsweise umfasst die S-CSCF-Einrichtung Mittel zum Deregistrieren der S-CSCF-Einrichtung bei der IP-SM-GW-Einrichtung.

Dies ermöglicht es der S-CSCF-Einrichtung, sich bei der IP-SM-GW-Einrichtung zu deregistrieren, insbesondere wenn der Nutzer des Endgeräts nicht mehr über das IMS erreichbar sein möchte.

Darüber hinaus umfasst die Erfindung eine IP-SM-GW-Einrichtung, die dazu eingerichtet ist, Schritte des erfindungsgemäßen Verfahrens auszuführen. Insbesondere wird die IP-SM-GW-Einrichtung zum Weiterleiten einer Kurznachricht von einer SC-Einrichtung an eine S-CSCF-Einrichtung und/oder zum Weiterleiten einer Kurznachricht von der S-CSCF-Einrichtung an die SC-Einrichtung bereitgestellt.

Die erfindungsgemäße IP-SM-GW-Einrichtung umfasst Mittel zum Registrieren der S-CSCF-Einrichtung bei der IP-SM-GW-Einrichtung, um der IP-SM-GW-Einrichtung zu ermöglichen, Kurznachrichten an ein Endgerät zu liefern, das durch mindestens einen Nutzeridentifikator identifiziert wird, der bei der S-CSCF-Einrichtung registriert ist, Mittel zum Registrieren bei einer HSS-Einrichtung, dass das Endgerät, das durch den mindestens einen Nutzeridentifikator identifiziert ist, über die IP-SM-GW-Einrichtung erreichbar ist, Mittel zum Empfangen einer Kurznachricht und Mittel zum Weiterleiten der Kurznachricht von der IP-SM-GW-Einrichtung an die S-CSCF-Einrichtung.

Dies hat den Vorteil, dass die erfindungsgemäße IP-SM-GW-Einrichtung an dem erfindungsgemäßen Verfahren teilnehmen kann.

Vorzugsweise umfasst die IP-SM-GW-Einrichtung Mittel zum Senden einer Anfrage, einen zweiten Nutzeridentifikator, der das Endgerät identifiziert, zu ermitteln, basierend auf einem ersten Nutzeridentifikator, der das Endgerät identifiziert, von der IP-SM-GW-Einrichtung an die HSS-Einrichtung, und Mittel zum Empfangen des zweiten Nutzeridentifikators von der HSS-Einrichtung.

Diese Mittel haben den Vorteil, dass sie der IP-SM-GW-Einrichtung ermöglichen, basierend auf einem ersten Nutzeridentifikator einen zweiten Nutzeridentifikator zu erfragen. Dies ist insbesondere dann von Vorteil, wenn die IP-SM-GW-Einrichtung eine Kurznachricht erhält, die an ein Endgerät ausgeliefert werden soll, das durch den zweiten Nutzeridentifikator in der Kurznachricht identifiziert ist. Sollte in diesem Falle eine Zustellung nur über den ersten Nutzeridentifikator möglich sein, ist es notwendig, dass die IP-SM-GW-Einrichtung den zweiten Nutzeridentifikator auf den ersten Nutzeridentifikator abbilden kann. Hierfür muss die IP-SM-GW-Einrichtung natürlich den ersten Nutzeridentifikator, den zweiten Nutzeridentifikator und eine Relation zwischen den bei den Nutzeridentifikatoren kennen.

Vorzugsweise umfasst die erfindungsgemäße IP-SM-GW-Einrichtung Mittel zum Senden einer Anfrage, einen dritten Nutzeridentifikator zu ermitteln, der das Endgerät identifiziert, basierend auf dem zweiten Nutzeridentifikator, der das Endgerät identifiziert, von der IP-SM-GW-Einrichtung an die HSS-Einrichtung, und Mittel zum Empfangen des dritten Nutzeridentifikators von der HSS-Einrichtung.

Diese Mittel haben den Vorteil, dass die IP-SM-GW-Einrichtung einen dritten Nutzeridentifikator basierend auf einem zweiten Nutzeridentifikator ermitteln kann. Auf diese Weise wird es möglich, einen dritten Nutzeridentifikator auf der IP-SM-GW-Einrichtung auf einen zweiten Nutzeridentifikator abzubilden.

Vorzugsweise umfasst die erfindungsgemäße IP-SM-GW-Einrichtung Mittel zum Speichern einer Relation zwischen dem ersten und dem dritten Nutzeridentifikator.

Die hat den Vorteil, dass die IP-SM-GW-Einrichtung einen dritten Nutzeridentifikator auf einen ersten Nutzeridentifikator abbilden kann.

In einer besonders vorteilhaften Ausführungsform umfasst die IP-SM-GW-Einrichtung Mittel zum Empfangen einer Kurznachricht, die an den dritten Nutzeridentifikator adressiert ist, der das Endgerät identifiziert, Mittel zum Ermitteln des ersten Nutzeridentifikators, der das Endgerät identifiziert, basierend auf dem dritten Nutzeridentifikator und der Relation zwischen dem ersten und dem dritten Nutzeridentifikator und Mittel zum Weiterleiten der Kurznachricht und des ersten Nutzeridentifikators von der IP-SM-GW-Einrichtung an die S-CSCF-Einrichtung.

Mit Hilfe dieser Mittel kann die IP-SM-GW-Einrichtung eine Kurznachricht, die an den dritten Nutzeridentifikator adressiert ist, auch dann ausliefern, wenn eine Weiterleitung nur aufgrund des ersten Nutzeridentifikators möglich ist.

Vorzugsweise umfasst die IP-SM-GW-Einrichtung Mittel zum Empfangen von Daten, die eine nicht erfolgreiche Auslieferung einer Kurznachricht an das Endgerät anzeigen, von der S-CSCF-Einrichtung.

Dadurch kann die IP-SM-GW-Einrichtung Daten empfangen, die sie erkennen lassen, dass eine Auslieferung einer Kurznachricht an das Endgerät scheiterte.

Vorzugsweise umfasst die erfindungsgemäße IP-SM-GW-Einrichtung Mittel zum Senden von Daten, die eine nicht erfolgreiche Auslieferung einer Kurznachricht an das Endgerät anzeigen, von der IP-SM-GW-Einrichtung an die SC-Einrichtung.

Aufgrund dieses Mittels kann die IP-SM-GW-Einrichtung die entsprechende SC-Einrichtung über das Scheitern der Auslieferung einer Kurznachricht an das Endgerät informieren.

In einer bevorzugten Ausführungsform umfasst die erfindungsgemäße IP-SM-GW-Einrichtung Mittel zum Senden einer Anfrage, eine Überwachung der Erreichbarkeit des Endgeräts, das durch den mindestens einen Nutzeridentifikator identifiziert wird, zu aktivieren, von der IP-SM-GW-Einrichtung an die HSS-Einrichtung.

Mit Hilfe dieses Mittels kann die IP-SM-GW-Einrichtung die HSS-Einrichtung beauftragen, die Überwachung der Erreichbarkeit des Endgeräts zu aktivieren, so dass die IP-SM-GW-Einrichtung informiert wird, wenn das Endgerät über IMS wieder erreichbar sein sollte.

Vorzugsweise umfasst die erfindungsgemäße IP-SM-GW-Einrichtung Mittel zum Empfangen von ersten Daten, die anzeigen, dass das Endgerät, das durch den mindestens einen Nutzeridentifikator identifiziert wird, erreichbar ist, von der S-CSCF-Einrichtung.

Aufgrund dieses Mittels kann der IP-SM-GW-Einrichtung von der S-CSCF-Einrichtung die Wiedererreichbarkeit des Endgeräts mitgeteilt werden.

Vorzugsweise umfasst die IP-SM-GW-Einrichtung Mittel zum Senden von zweiten Daten, die anzeigen, dass das Endgerät, das durch den mindestens einen Nutzeridentifikator identifiziert wird, erreichbar ist, von der IP-SM-GW-Einrichtung an die HSS-Einrichtung, beim Empfangen der ersten Daten auf der IP-SM-GW-Einrichtung.

Auf diese Weise kann die IP-SM-GW-Einrichtung die HSS-Einrichtung darüber informieren, dass das Endgerät wieder erreichbar ist, sobald es die entsprechende Information von der S-CSCF-Einrichtung erhalten hat.

In einer bevorzugten Ausführungsform umfasst die IP-SM-GW-Einrichtung Mittel zum Senden einer Anfrage, die Überwachung der Erreichbarkeit eines Endgeräts, das durch den mindestens einen Nutzeridentifikator identifiziert wird, zu deaktivieren von der IP-SM-GW-Einrichtung an die HSS-Einrichtung.

Auf diese Weise kann die IP-SM-GW-Einrichtung die HSS-Einrichtung beauftragen, die Überwachung der Erreichbarkeit eines Endgeräts zu deaktivieren.

Vorzugsweise umfasst die erfindungsgemäße IP-SM-GW-Einrichtung weiterhin Mittel zum Deregistrieren der S-CSCF-Einrichtung bei der IP-SM-GW-Einrichtung.

Mit Hilfe dieses Mittels können sich S-CSCF-Einrichtungen bei der IP-SM-GW-Einrichtung deregistrieren. Dies ist insbesondere dann sinnvoll, wenn über die S-CSCF-Einrichtung keine Endgeräte mehr über IMS erreicht werden können. Durch die Deregistrierung können entsprechende Ressourcen wieder freigegeben und anderweitig verwendet werden.

Weiterhin umfasst die Erfindung eine HSS-Einrichtung, die dazu eingerichtet ist, Schritte des erfindungsgemäßen Verfahrens auszuführen. Insbesondere wird die HSS-Einrichtung zum Registrieren von Kommunikationsendpunkten und zum Feststellen eines Kommunikationsendpunkts für die Weiterleitung einer Kurznachricht bereitgestellt.

Erfindungsgemäß umfasst die HSS-Einrichtung Mittel zum Registrieren, dass ein Endgerät, das durch mindestens einen Nutzeridentifikator identifiziert ist, über eine IP-SM-GW-Einrichtung erreichbar ist.

Dies hat den Vorteil, dass die HSS-Einrichtung auf Anfrage darüber informieren kann, über welche IP-SM-GW-Einrichtung ein Endgerät erreichbar ist.

Vorzugsweise umfasst die erfindungsgemäße HSS-Einrichtung Mittel zum Feststellen, ob eine Kurznachricht, die an den mindestens einen Nutzeridentifikator adressiert ist, bereits im Netzwerk vorliegt, sobald bei der HSS-Einrichtung registriert wird, dass das Endgerät, das durch den mindestens einen Nutzeridentifikator identifiziert wird, über die IP-SM-GW-Einrichtung erreichbar ist, und Mittel zum Senden einer Anzeige an die mindestens eine SC-Einrichtung, wenn eine Kurznachricht, die an den mindestens einen Nutzeridentifikator adressiert ist, bereits im Netzwerk vorliegt.

Dadurch ergibt sich der Vorteil, dass wartende Kurznachrichten für ein Endgerät ausgeliefert werden können, sobald die HSS-Einrichtung davon erfährt, dass das Endgerät über IMS erreichbar ist.

In einer bevorzugten Ausführungsform umfasst die HSS-Einrichtung Mittel zum Empfangen einer Anfrage, einen zweiten Nutzeridentifikator, der das Endgerät identifiziert, zu ermitteln, basierend auf einem ersten Nutzeridentifikator, der das Endgerät identifiziert, von der IP-SM-GW-Einrichtung, Mittel zum Ermitteln des zweiten Nutzeridentifikators, basierend auf dem ersten Nutzeridentifikator und Mittel zum Senden des zweiten Nutzeridentifikators von der HSS-Einrichtung an die IP-SM-GW-Einrichtung.

Diese Mittel haben den Vorteil, dass die HSS-Einrichtung für die IP-SM-GW-Einrichtung einen zweiten Nutzeridentifikator basierend auf einem ersten Nutzeridentifikator ermitteln kann.

Vorzugsweise umfasst die erfindungsgemäße HSS-Einrichtung Mittel zum Empfangen einer Anfrage, einen dritten Nutzeridentifikator zu ermitteln, der das Endgerät identifiziert, basierend auf dem zweiten Nutzeridentifikator, der das Endgerät identifiziert, von der IP-SM-GW-Einrichtung, Mittel zum Ermitteln des dritten Nutzeridentifikators, basierend auf dem zweiten Nutzeridentifikator und Mittel zum Senden des dritten Nutzeridentifikators von der HSS-Einrichtung an die IP-SM-GW-Einrichtung.

Hierdurch kann die HSS-Einrichtung für die IP-SM-GW-Einrichtung einen dritten Nutzeridentifikator, basierend auf dem zweiten Nutzeridentifikator, ermitteln.

Vorzugsweise umfasst die erfindungsgemäße HSS-Einrichtung Mittel zum Empfangen einer Anfrage nach einer Adresse, an welche eine SC-Einrichtung eine Kurznachricht weiterleiten soll, um so die Kurznachricht an das Endgerät auszuliefern, und Mittel zum Senden der erfragten Adresse von der HSS-Einrichtung an die SC-Einrichtung in Reaktion auf die Anfrage.

Diese Mittel ermöglichen es der HSS-Einrichtung, einer SC-Einrichtung eine Adresse bereitzustellen, an welche die SC-Einrichtung eine Kurznachricht weiterleiten soll.

In einer bevorzugten Ausführungsform umfasst die HSS-Einrichtung Mittel zum Empfangen einer Anfrage, eine Überwachung der Erreichbarkeit des Endgeräts, das durch den mindestens einen Nutzeridentifikator identifiziert wird, zu aktivieren, von der IP-SM-GW-Einrichtung.

Auf diese Weise kann die HSS-Einrichtung die Aufforderung empfangen, die Überwachung der Erreichbarkeit des Endgeräts bei der S-CSCF-Einrichtung zu aktivieren.

Vorzugsweise umfasst die HSS-Einrichtung Mittel zum Senden einer Anfrage, eine Überwachung einer Erreichbarkeit eines Endgeräts, das durch den mindestens einen Nutzeridentifikator identifiziert wird, zu aktivieren von der HSS-Einrichtung an die S-CSCF-Einrichtung.

Auf diese Weise kann die HSS-Einrichtung die S-CSCF-Einrichtung dazu veranlassen, die Erreichbarkeit eines Endgeräts zu überwachen.

In einer bevorzugten Ausführungsform umfasst die HSS-Einrichtung Mittel zum Empfangen von zweiten Daten, die anzeigen, dass das Endgerät, das durch den mindestens einen Nutzeridentifikator identifiziert wird, erreichbar ist, von der IP-SM-GW-Einrichtung.

Auf diese Weise kann die HSS-Einrichtung darüber informiert werden, dass das Endgerät wieder über IMS erreichbar ist.

Vorzugsweise umfasst die HSS-Einrichtung Mittel zum Senden von Daten, die anzeigen, dass das Endgerät, das durch den mindestens einen Nutzeridentifikator identifiziert wird, erreichbar ist, von der HSS-Einrichtung an die mindestens eine SC-Einrichtung, beim Empfangen der zweiten Daten auf der HSS-Einrichtung.

Auf diese Weise kann die HSS-Einrichtung die mindestens eine SC-Einrichtung alarmieren, wenn das Endgerät wieder über IMS erreichbar ist, so dass die mindestens eine SC-Einrichtung eventuell wartende Kurznachrichten unverzüglich an das Endgerät ausliefern kann.

In einer bevorzugten Ausführungsform umfasst die HSS-Einrichtung Mittel zum Empfangen einer Anfrage, die Überwachung der Erreichbarkeit eines Endgeräts, das durch den mindestens einen Nutzeridentifikator identifiziert wird, zu deaktivieren, von der IP-SM-GW-Einrichtung.

Auf diese Weise kann die HSS-Einrichtung die Aufforderung empfangen, die Überwachung der Erreichbarkeit eines Endgeräts zu deaktivieren.

Vorzugsweise umfasst die HSS-Einrichtung Mittel zum Senden einer Anfrage, die Überwachung der Erreichbarkeit eines Endgeräts, das durch den mindestens einen Nutzeridentifikator identifiziert wird, zu deaktivieren, von der HSS-Einrichtung an die S-CSCF-Einrichtung.

Auf diese Weise kann die HSS-Einrichtung die S-CSCF-Einrichtung anweisen, die Überwachung der Erreichbarkeit eines Endgeräts zu deaktivieren.

Vorzugsweise umfasst die HSS-Einrichtung Mittel zum Empfangen von Daten, die eine nicht erfolgreiche Auslieferung einer Kurznachricht an das Endgerät, das durch den mindestens einen Nutzeridentifikator identifiziert wird, anzeigen, von der SC-Einrichtung.

Dies hat den Vorteil, dass der HSS-Einrichtung mitgeteilt werden kann, dass die Auslieferung einer Kurznachricht an das Endgerät gescheitert ist.

In einer besonders bevorzugten Ausführungsform umfasst die HSS-Einrichtung Mittel zum Ermitteln bei Empfang der Daten, die eine nicht erfolgreiche Auslieferung anzeigen, ob ein Endgerät, das durch den mindestens einen Nutzeridentifikator identifiziert wird, erreichbar ist über eine MSC-Einrichtung und/oder eine SGSN-Einrichtung.

Dieses Mittel ermöglicht es der HSS-Einrichtung zu ermitteln, ob das Endgerät, das über IMS nicht erreicht werden kann, über einen anderen Weg, zum Beispiel über eine MSC-Einrichtung und/oder eine SGSN-Einrichtung, das heißt über die CS-Domäne oder die PS-Domäne, erreichbar ist.

In einer bevorzugten Ausführungsform umfasst die erfindungsgemäße HSS-Einrichtung Mittel zum Senden von Daten, die anzeigen, dass das Endgerät, das durch den mindestens einen Nutzeridentifikator identifiziert wird, über eine MSC-Einrichtung und/oder eine SGSN-Einrichtung erreichbar ist, von der HSS-Einrichtung an die mindestens eine SC-Einrichtung, wenn das Endgerät erreichbar ist über eine MSC-Einrichtung und/oder eine SGSN-Einrichtung.

Mit Hilfe dieses Mittels kann die HSS-Einrichtung die mindestens eine SC-Einrichtung darüber informieren, dass das Endgerät über andere Wege, zum Beispiel über die CS-Domäne bzw. PS-Domäne, erreichbar ist, so dass die mindestens eine SC-Einrichtung eine Auslieferung der Kurznachricht über diesen anderen Weg anstoßen kann.

Weiterhin umfasst die Erfindung ein System für die Übertragung einer Kurznachricht über ein Netzwerk, das die oben beschriebenen erfindungsgemäßen Einrichtungen kombiniert. Erfindungsgemäß umfasst das System ein Endgerät für das Senden und Empfangen einer Kurznachricht, wobei das Endgerät durch mindestens einen Nutzeridentifikator identifiziert wird, welcher sich auf einen Nutzer bezieht, der das Endgerät benutzt, eine erfindungsgemäße S-CSCF-Einrichtung, mindestens eine SC-Einrichtung zum Empfangen und Weiterleiten einer Kurznachricht, eine erfindungsgemäße IP-SM-GW-Einrichtung und eine erfindungsgemäße HSS-Einrichtung.

Dieses System hat den Vorteil, dass es das erfindungsgemäße Verfahren ausführen kann. Somit hat das System dieselben Vorteile wie das Verfahren.

Die Erfindung umfasst weiterhin ein Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, so dass das erfindungsgemäße Verfahren ausgeführt oder zumindest eine erfindungsgemäße Einrichtung gebildet wird aus einer Gruppe von erfindungsgemäßen Einrichtungen umfassend die erfindungsgemäße S-CSCF-Einrichtung, die erfindungsgemäße IP-SM-GW-Einrichtung und die erfindungsgemäße HSS-Einrichtung.

Das Computerprogrammprodukt besitzt zumindest dieselben Vorteile wie das Verfahren, das es ausführt, oder die Einrichtung, die es bildet. Darüber hinaus hat das Computerprogrammprodukt den Vorteil, dass es einfach und flexibel die Verwendung der Erfindung dadurch ermöglicht, dass das gespeicherte Programm auf einer generischen Hardware ausgeführt wird. Somit ergeben sich besondere Vorteile im Bereich der Einfachheit und Flexibilität.

Erfindungsgemäß wird mit der Registrierung des IP-SM-GW im HSS (genauer HLR) geprüft, ob message waiting data vorhanden sind und in diesem Fall eine Alarmierung der SMSCs angestoßen.

Der bisher bekannte Stand der Technik sieht vor, dass das HSS die Nachricht SendRoutingInfoForSM vom SMS-GMSC zum IP-SM-GW weiterleitet (siehe Kapitel 5.3.2). Die Funktionalität im IP-SM-GW ist ähnlich der in 3GPP TR 23.840 beschriebenen komplizierten Funktion, die nach Empfang der vom HSS weitergeleiteten Nachricht SendRoutingInfoForSM die Vergabe einer Korrelierungsnummer vorsieht, mit der der Teilnehmer letztlich identifiziert wird.

Erfindungsgemäß wird bei nicht erfolgreicher Zustellung einer Kurznachricht über das IMS dieser Weg automatisch deaktiviert und es wird eine Zustellung der Kurznachricht über MSC oder SGSN (falls möglich) automatisch angestoßen.

Erfindungsgemäß wird eine Wiedererreichbarkeit des Endgeräts über das IMS automatisch festgestellt und dieser Weg wird reaktiviert.

Erfindungsgemäß prüft bei Registrierung eines IP-SM-GW im HSS das HSS, ob message waiting data vorhanden sind. Ist dies der Fall, so werden die Short Message Service Centre alarmiert.

Das HSS (genauer HLR) sendet die IMSI des Teilnehmers in der Nachricht AnyTimeModification ack zum IP-SM-GW. Dieses kann dann mit Hilfe der IMSI die eintreffende Kurznachricht dem Teilnehmer zuordnen ohne dass eine Korrelierungsnummer vergeben werden muss.

Nach nicht erfolgreicher Zustellung der Kurznachricht über das IMS (Empfang der Nachricht ReportSM-DeliveryStatus) markiert das HSS (genauer HLR) die Adresse des IP-SM-GW als nicht erreichbar (Mobile Not Reachable via IMS) und sendet (falls der Teilnehmer über MSC oder SGSN erreichbar ist) die Nachricht AlertServiceCentre zum SMS-GMSC - damit wird die Zustellung der Kurznachricht über MSC oder SGSN angestoßen.

Ferner aktiviert das IP-SM-GW dynamische Filter-Kriterien, so dass eine Wiedererreichbarkeit des Teilnehmers über das IMS überwacht wird. Nach Feststellen der Wiedererreichbarkeit des Teilnehmers über das IMS mittels der aktivierten dynamischen Filter-Kriterien sendet das IP-SM-GW die Nachricht ReadyForSM zum HSS (genauer HLR). Diese Nachricht beinhaltet erfindungsgemäß einen Aktivierungsindikator, der bewirkt, dass die im HLR noch gespeicherte aber als nicht erreichbar markierte IP-SM-GW Adresse wieder als erreichbar markiert wird. Ferner deaktiviert das IP-SM-GW die dynamischen Filter-Kriterien.

Von Vorteil ist, dass wartende Short Message Service Centre alarmiert werden um mit der Zustellung von Kurznachrichten zu beginnen, wenn sich ein IP-SM-GW im HSS registriert.

Von Vorteil ist, dass aufgrund der in der Nachricht AnyTimeModification ack übertragenen IMSI keine Korrelierungsnummer vom IP-SM-GW vergeben werden muss, dass die Nachricht SendRoutingInfoForSM nicht vom HLR zum IP-SM-GW weitergeleitet werden muss und dass das IP-SM-GW selbst nicht die Nachricht SendRoutingInfoForSM zum HLR senden muss.

Von Vorteil ist, dass nach nicht erfolgreicher Zustellung einer Kurznachricht über das IMS der existierende automatische Wiederholungsmechanismus im SMS-GMSC genutzt wird, um die Kurznachricht über MSC oder SGSN zuzustellen; ferner, dass nach nicht erfolgreicher Zustellung der Kurznachricht über das IMS dieser Weg automatisch deaktiviert wird bis der Teilnehmer wieder über das IMS erreichbar ist.

Von Vorteil ist, dass aufgrund des in der Nachricht ReadyForSM übertragenen Aktivierungsindikators die Zustellung von Kurznachrichten über da IMS automatisch reaktiviert werden kann.

Vorteilhafte Ausgestaltungen und weitere Details der vorliegenden Erfindung werden im Folgenden anhand verschiedener Ausführungsbeispiele mit Bezug auf die Figuren beschrieben.

Fig. 1 stellt die Registrierung eines Endgeräts nach dem Verfahren des Standes der Technik dar.

Fig. 2 zeigt die Auslieferungsprozedur einer Kurznachricht nach dem Verfahren des Stands der Technik.

Fig. 3 illustriert, wie nach dem Stand der Technik Auslieferungsberichte verteilt werden.

Fig. 4 zeigt eine Ausführungsform des Registrierungsverfahrens gemäß der vorliegenden Erfindung.

Fig. 5 zeigt eine Ausführungsform des Registrierungsverfahrens gemäß der vorliegenden Erfindung in Kombination mit einer Ausführungsform der Auslieferung der Kurznachricht gemäß der vorliegenden Erfindung.

Fig. 6 zeigt, wie nach einer Ausführungsform des erfindungsgemäßen Verfahrens auf eine gescheiterte Auslieferung einer Kurznachricht reagiert wird.

Fig. 7 zeigt, wie nach einer Ausführungsform des erfindungsgemäßen Verfahrens beim Scheitern der Auslieferung der Kurznachricht über das IMS die Kurznachricht gegebenenfalls über die CS- bzw. die PS-Domäne ausgeliefert wird.

Fig. 8 zeigt eine Ausführungsform des Deregistrierungsverfahrens gemäß der vorliegenden Erfindung.

Fig. 9 zeigt eine Ausführungsform einer erfindungsgemäßen S-CSCF-Einrichtung.

Fig. 10 zeigt eine Ausführungsform einer erfindungsgemäßen IP-SM-GW-Einrichtung.

Fig. 11 zeigt eine Ausführungsform einer erfindungsgemäßen HSS-Einrichtung.

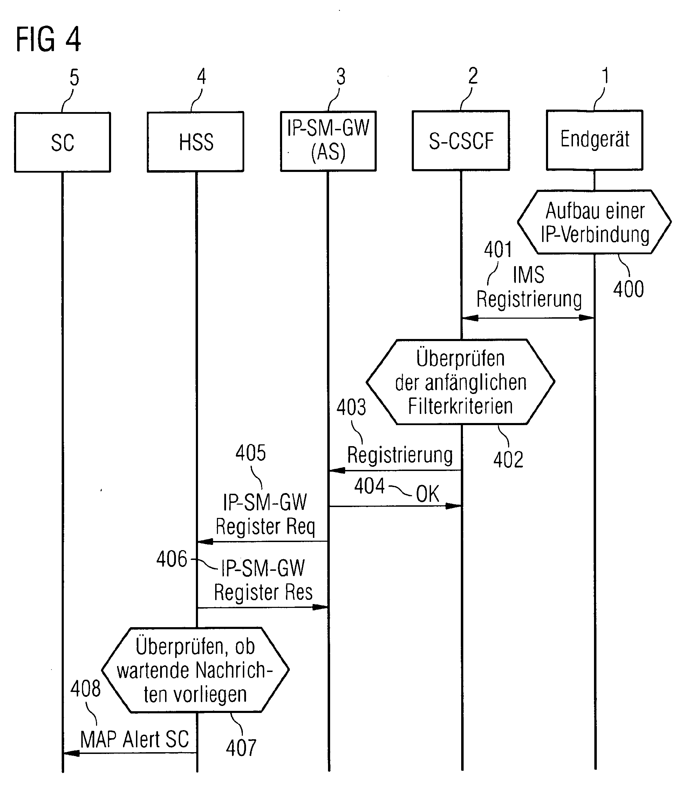

Mit Bezug auf Fig. 4 wird nun erklärt, wie gemäß einer Ausführungsform des erfindungsgemäßen Verfahrens bei Registrierung des Endgeräts im Netzwerk gegebenenfalls wartende Kurznachrichten unverzüglich ausgeliefert werden.

In Schritt 400 baut das Endgerät 1 eine IP-Verbindung mit dem IMS auf. In Schritt 401 führt das Endgerät 1 eine IMS Registrierung bei der S-CSCF-Einrichtung 2 durch. In Schritt 402 überprüft die S-CSCF-Einrichtung 2 die anfänglichen Filterkriterien. Darauf registriert sich die S-CSCF-Einrichtung 2 bei der IP-SM-GW-Einrichtung 3 in Schritt 403. Die IP-SM-GW-Einrichtung 3 antwortet mit einer OK-Nachricht in Schritt 404. Die IP-SM-GW-Einrichtung 3 sendet in Schritt 405 eine "IP-SM-GW Register Req"-Nachricht an die HSS-Einrichtung 4, die wiederum mit einer "IP-SM-GW Register Res"-Nachricht in Schritt 406 antwortet.

In Schritt 407 überprüft die HSS-Einrichtung 4, ob wartende Kurznachrichten (Message Waiting Data) für das registrierte Endgerät 1 vorliegen. Sollte dies der Fall sein, werden in Schritt 408 alle SC-Einrichtungen, bei denen wartende Kurznachrichten für das registrierte Endgerät 1 vorliegen, durch eine "MAP Alert SC"-Nachricht alarmiert, so dass die SC-Einrichtungen die Auslieferung der Kurznachricht an das Endgerät 1 anstoßen können.

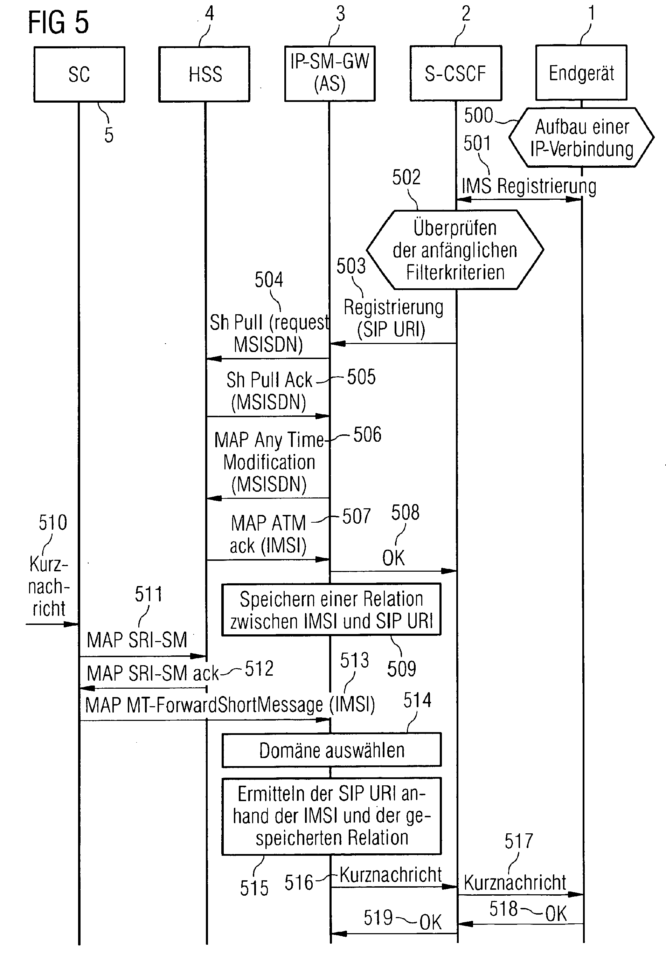

Fig. 5 illustriert, wie gemäß einer Ausführungsform der Erfindung der Auslieferungsprozess der Kurznachricht gegenüber dem Stand der Technik verbessert wird. Die Schritte 500 - 502 entsprechen den Schritten 400 - 402, so dass auf eine erneute Erläuterung verzichtet werden kann. In Schritt 503 registriert sich die S-CSCF-Einrichtung 2 bei der IP-SM-GW-Einrichtung 3 und übergibt dabei eine SIP URI (SIP URI = Session Initiation Protocol Uniform Resource Identifier). Bei der SIP URI handelt es sich um einen Nutzeridentifikator, mit dessen Hilfe das Endgerät 1 adressiert werden kann.

Sofern die IMSI und MSISDN des Endgeräts (zwei weitere Nutzeridentifikatoren) der IP-SM-GW-Einrichtung 3 nicht bekannt sind, fragt die IP-SM-GW-Einrichtung 3 in Schritt 504 über die Sh-Schnittstelle bei der HSS-Einrichtung an, welche MSISDN zu der bereitgestellten SIP URI gehört. Dies wird über eine "Sh Pull"-Nachricht bewerkstelligt, die als Parameter einer Anfrage nach der MSISDN enthält.

Die HSS-Einrichtung 4 antwortet auf diese Anfrage mit einer "Sh Pull Ack (MSISDN)"-Nachricht in Schritt 505. In dieser Nachricht übergibt die HSS-Einrichtung 4 der IP-SM-GW-Einrichtung 3 die MSISDN, die dasselbe Endgerät adressiert wie die bereitgestellte SIP URI. In Schritt 506 fragt die IP-SM-GW-Einrichtung 3 dann bei der HSS-Einrichtung 4 nach der zugehörigen IMSI des Endgeräts. Dies erfolgt über eine "MAP Any Time Modification"-Nachricht, die als Parameter die MSISDN in sich trägt.

Die HSS-Einrichtung 4 antwortet auf diese Nachricht mit einer "MAP ATM ack (IMSI)"-Nachricht in Schritt 507. Das heißt, die HSS-Einrichtung antwortet auf die Anfrage durch die Bereitstellung der zugehörigen IMSI.

Nachdem die IP-SM-GW-Einrichtung 3 die IMSI erhalten hat, antwortet sie der S-CSCF-Einrichtung 2 auf ihr Registrierungsbegehren aus Schritt 503 mit einer OK-Nachricht in Schritt 508. In Schritt 509 speichert die IP-SM-GW-Einrichtung 3 eine Relation zwischen der IMSI und der dazugehörigen SIP URI. Dies wird getan, damit die IP-SM-GW-Einrichtung 3 eine Kurznachricht, die an eine IMSI adressiert ist, an die dazugehörige SIP URI ausliefern kann. Die Übersetzung der IMSI in die SIP URI ist deswegen notwendig, weil im IP Multimedia Subsystem eine Übertragung an eine SIP URI erfolgt. Eine IMSI als Nutzeridentifikator kann im IMS nicht verwendet werden.

Ab Schritt 510 wird die Auslieferung einer Kurznachricht an das Endgerät 1 dargestellt. Zunächst erhält die SC-Einrichtung 5 in Schritt 510 eine Kurznachricht. Die SC-Einrichtung 5 sendet in Schritt 511 eine "MAP Send Routing Info for SM"-Nachricht an die HSS-Einrichtung 4. Die HSS-Einrichtung 4 überprüft, ob die Adresse einer IP-SM-GW-Einrichtung gespeichert ist, die nicht als nicht erreichbar markiert ist, so dass die Kurznachricht an diese IP-SM-GW-Einrichtung weitergeleitet werden kann, um sie dem entsprechenden Endgerät 1 zuzustellen.

In Schritt 512 antwortet die HSS-Einrichtung 4 mit der Adresse der zuständigen IP-SM-GW-Einrichtung 3. Dies tut die HSS-Einrichtung 4, indem sie der SC-Einrichtung 5 eine "MAP SRI-SM ack"-Nachricht sendet.

In Schritt 513 liefert die SC-Einrichtung 5 die entsprechende Kurznachricht an die durch die erfragte Adresse identifizierte IP-SM-GW-Einrichtung 3 aus. Dies tut die SC-Einrichtung 5, indem sie eine "MAP MT-ForwardShortMessage"-Nachricht an die IP-SM-GW-Einrichtung 3 sendet. Diese Nachricht enthält eine IMSI als Nutzeridentifikator, wobei die Kurznachricht an das Endgerät auszuliefern ist, das durch diese IMSI identifiziert wird.

In Schritt 514 wählt die IP-SM-GW-Einrichtung 3 die Domäne aus, über die die Kurznachricht an das Endgerät zugestellt werden soll. Im vorliegenden Fall wird das IMS für die Zustellung ausgewählt.

In Schritt 515 ermittelt die IP-SM-GW-Einrichtung 3 basierend auf der IMSI, an die die Kurznachricht weitergeleitet werden soll, und basierend auf der gespeicherten Relation zwischen der IMSI und der SIP URI die SIP URI, an die die Kurznachricht weitergeleitet werden soll.

Nachdem in Schritt 515 die SIP URI ermittelt wurde, die das Endgerät identifiziert, an das über das IMS die Kurznachricht weitergeleitet werden soll, wird in Schritt 516 die Kurznachricht an die zuständige S-CSCF-Einrichtung 2 weitergeleitet. In Schritt 517 liefert die S-CSCF-Einrichtung 2 die Kurznachricht an das Endgerät aus.

Sofern die Auslieferung erfolgreich ist, antwortet das Endgerät mit einer OK-Nachricht in 518. Diese OK-Nachricht wird in Schritt 519 von der S-CSCF-Einrichtung 2 an die IP-SM-GW-Einrichtung 3 weitergeleitet.

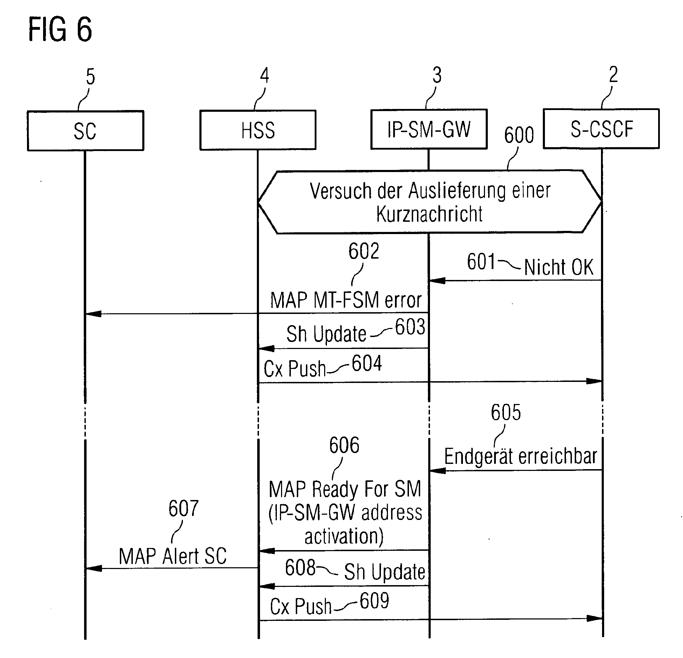

In Fig. 6 wird illustriert, welche Schritte eine Ausführungsform des erfindungsgemäßen Verfahrens ausführt, wenn der Versuch einer Auslieferung einer Kurznachricht über das IMS scheitert. In Schritt 600 wird versucht, eine Kurznachricht über das IMS an das Endgerät auszuliefern. Dies kann beispielsweise mit Hilfe des in Fig. 5 gezeigten Ablaufs geschehen. Sofern die Auslieferung über das IMS scheitert, sendet die S-CSCF-Einrichtung 2 in Schritt 601 eine "Nicht OK"-Nachricht an die IP-SM-GW-Einrichtung 3. Daraufhin sendet die IP-SM-GW-Einrichtung 3 in Schritt 602 eine "MAP MT-FSM error"-Nachricht an die SC-Einrichtung 5. Mit dieser Nachricht berichtet die IP-SM-GW-Einrichtung an die SC-Einrichtung, dass die Auslieferung der Kurznachricht an das Endgerät 1 fehlgeschlagen ist.

Daraufhin sendet die IP-SM-GW-Einrichtung 3 in Schritt 603 eine "Sh Update"-Nachricht an die HSS-Einrichtung 4. Mit dieser Nachricht aktualisiert die IP-SM-GW-Einrichtung die dynamische Dienstaktivierungsinformation in der HSS-Einrichtung, das heißt, es beauftragt die HSS-Einrichtung, die anfänglichen Filterkriterien (iFC = initial Filter Criteria) auf der S-CSCF-Einrichtung 2 zu aktivieren, so dass die S-CSCF-Einrichtung 2 die IP-SM-GW-Einrichtung 3 informiert, sobald das Endgerät 1 wieder über die S-CSCF-Einrichtung 2 erreichbar ist.

In Schritt 604 übergibt die HSS-Einrichtung 4 die anfänglichen Filterkriterien an die S-CSCF-Einrichtung 2, damit die S-CSCF-Einrichtung 2 bei Wiedererreichbarkeit des Endgeräts 1 über die S-CSCF-Einrichtung 2 die IP-SM-GW-Einrichtung 3 informiert. Dies geschieht über eine "Cx Push"-Nachricht.

Ab Schritt 605 wird dargestellt, was nach der in Fig. 6 gezeigten Ausführungsform des erfindungsgemäßen Verfahrens passiert, sobald das Endgerät wieder über die S-CSCF-Einrichtung 2 erreichbar ist. Wenn das Endgerät 1 wieder über die S-CSCF-Einrichtung 2 erreichbar ist, sendet die S-CSCF-Einrichtung 2 in Schritt 605 eine diesbezügliche Nachricht an die IP-SM-GW-Einrichtung 3. Die IP-SM-GW-Einrichtung 3 informiert die HSS-Einrichtung 4 mit einer "MAP Ready For SM"-Nachricht in Schritt 606 darüber, dass das Endgerät wieder über die IP-SM-GW-Einrichtung 3 erreichbar ist. In dieser Nachricht übergibt die IP-SM-GW-Einrichtung 3 an die HSS-Einrichtung 4 als Parameter eine "IP-SM-GW address activation".

Die HSS-Einrichtung 4 markiert die IP-SM-GW-Adresse der IP-SM-GW-Einrichtung 3 als erreichbar, so dass eine Auslieferung von Kurznachrichten über das IMS wieder aktiviert wird. Sofern der HSS-Einrichtung 4 bekannt ist, dass bereits Kurznachrichten für das wieder erreichbare Endgerät 1 im Netzwerk warten, so alarmiert es die SC-Einrichtungen 5, bei denen die entsprechenden Kurznachrichten warten. Dies tut die HSS-Einrichtung dadurch, dass sie eine "MAP Alert SC"-Nachricht an die SC-Einrichtungen 5 schickt, auf denen die Kurznachrichten für das wieder erreichbare Endgerät 1 warten.

In Schritt 608 sendet die IP-SM-GW-Einrichtung 3 eine "Sh Update"-Nachricht an die HSS-Einrichtung 4. Mit dieser "Sh Update"-Nachricht bewirkt die IP-SM-GW-Einrichtung 3, dass die dynamischen anfänglichen Filterkriterien, die dafür zuständig sind, dass die S-CSCF-Einrichtung 2 die IP-SM-GW-Einrichtung 3 informiert, sobald das Endgerät wieder erreichbar ist, deaktiviert werden.

In Schritt 609 sendet die HSS-Einrichtung 4 über die Cx-Schnittstelle eine "Cx Push"-Nachricht an die S-CSCF-Einrichtung, damit diese die anfänglichen Filterkriterien deaktiviert, so dass die S-CSCF-Einrichtung 2 nicht länger überprüft, ob das Endgerät 1 erreichbar ist.

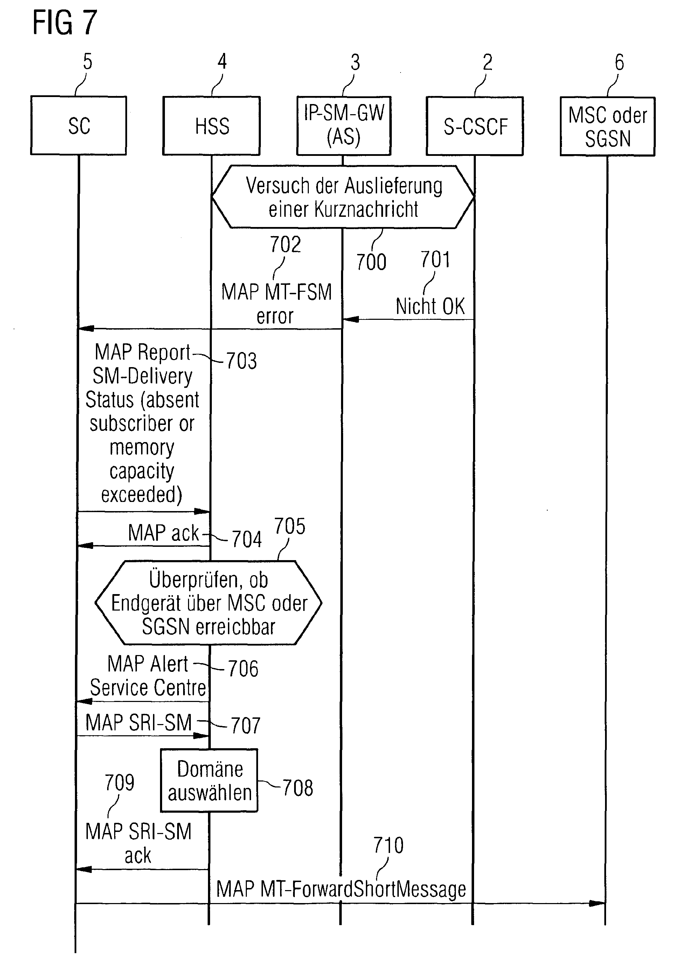

Fig. 7 stellt dar, wie gemäß einer Ausführungsform des erfindungsgemäßen Verfahrens auf eine nicht erfolgreiche Auslieferung einer Kurznachricht an das Endgerät reagiert wird. In Schritt 700 wird versucht, eine Kurznachricht an das Endgerät 1 auszuliefern, zum Beispiel so, wie es mit Bezug auf Fig. 5 beschrieben wurde. Wenn die Auslieferung scheitert, sendet die S-CSCF-Einrichtung 2 in Schritt 701 eine "Nicht OK"-Nachricht an die IP-SM-GW-Einrichtung 3.

Mit Hilfe einer "MAP MT-FSM error"-Nachricht informiert die IP-SM-GW-Einrichtung 3 die SC-Einrichtung 5 in Schritt 702 darüber, dass die Auslieferung der Kurznachricht an das Endgerät über das IMS gescheitert ist.

Falls der empfangene Fehler "absent subscriber" ist, benachrichtigt die SC-Einrichtung 5 die HSS-Einrichtung 4, dass die Zustellung nicht erfolgreich war. Dies erfolgt über eine "MAP Report SM-Delivery Status"-Nachricht in Schritt 703. Wenn die HSS-Einrichtung 4 die Nachricht "MAP Report SM-Delivery Status (absent subscriber)" erhält, während die HSS-Einrichtung 4 eine IP-SM-GW-Adresse speichert, die nicht als nicht erreichbar markiert ist, dann markiert die HSS-Einrichtung nicht das Endgerät als nicht erreichbar über die CS-Domäne oder die PS-Domäne, sondern markiert, dass das Endgerät nicht über die IP-SM-GW-Adresse erreichbar ist. Dadurch wird eine Auslieferung über das IMS unterdrückt. Mit anderen Worten wird bei Empfang einer "MAP Report SM-Delivery Status (absent subscriber)"-Nachricht weder das Flag MNRF (MNRF = Mobile Station Not Reachable Flag), noch das MNRG Flag (MNRG = Mobile Station Not Reachable For GPRS) aktiviert, sondern stattdessen wird die IP-SM-GW-Adresse als nicht erreichbar markiert. Der Hintergrund hierfür ist, dass die SC-Einrichtung 5 in Schritt 512 die IP-SM-GW-Adresse im Feld der MSC-Adresse erhält. Deswegen könnte es für die SC-Einrichtung so aussehen, dass die Auslieferung über die "Circuit Switch"-Domäne gescheitert ist, wenn sie die Nachricht erhält, dass die Auslieferung gescheitert ist, obwohl die Auslieferung über das IMS versucht wurde. Daher muss die HSS-Einrichtung 4 die Nachricht "MAP Report SM-Delivery Status" dahingehend interpretieren, ob die Auslieferung über die MSC-Einrichtung oder über die IP-SM-GW-Einrichtung scheiterte.

In Schritt 704 antwortet die HSS-Einrichtung 4 auf die "MAP Report SM-Delivery Status"-Nachricht mit einer "MAP ack"-Nachricht.

In Schritt 705 überprüft die HSS-Einrichtung 4, ob das Endgerät 1, das nunmehr nicht mehr über die IP-SM-GW-Einrichtung 3 erreichbar ist, stattdessen über eine MSC-Einrichtung oder eine SGSN-Einrichtung 6 erreichbar ist. Sollte dies der Fall sein, wird in Schritt 706 eine "MAP Alert Service Centre"-Nachricht von der HSS-Einrichtung 4 an die SC-Einrichtung 5 gesendet. Mit dieser Nachricht wird die SC-Einrichtung darüber informiert, dass das Endgerät über einen anderen Weg als das IMS erreichbar ist.

Daraufhin sendet die SC-Einrichtung in Schritt 707 eine "MAP Send Routing Info for SM"-Nachricht an die HSS-Einrichtung 4. Mit dieser Nachricht erfragt die SC-Einrichtung 5 eine Adresse von der HSS-Einrichtung 4, an die die Kurznachricht weitergeleitet werden kann, um die Kurznachricht so an das Endgerät 1 auszuliefern.

In Schritt 708 wählt die HSS-Einrichtung 4 eine Domäne aus, über die die Kurznachricht ausgeliefert werden soll. Die HSS-Einrichtung 4 entscheidet also, ob die Kurznachricht besser über die "Circuit Switch"-Domäne oder über die "Packet Switch"-Domäne ausgeliefert wird.

Nachdem die Entscheidung in 708 getroffen wurde bezüglich der Domäne, über die die Kurznachricht ausgeliefert werden soll, sendet die HSS-Einrichtung 4 an die SC-Einrichtung 5 eine "MAP SRI-SM ack"-Nachricht in Schritt 709. In dieser Nachricht übergibt die HSS-Einrichtung 4 eine Adresse, an die die Kurznachricht weitergeleitet werden soll, um sie so an das Endgerät 1 auszuliefern. In Schritt 710 sendet die SC-Einrichtung 5 dann die Kurznachricht an die MSC-Einrichtung 6 oder die SGSN-Einrichtung 6, die zu der Adresse gehört, die der SC-Einrichtung 5 von der HSS-Einrichtung 4 mitgeteilt wurde. Die Weiterleitung der Kurznachricht geschieht über die Nachricht "MAP MT-ForwardShortMessage" in Schritt 710.

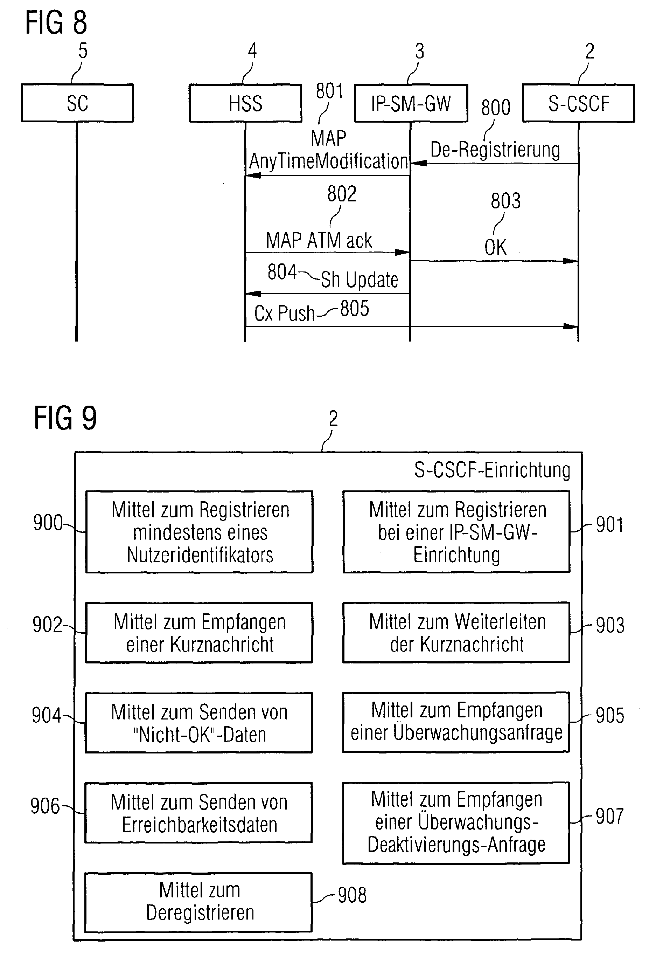

Fig. 8 illustriert die Schritte, die eine Ausführungsform des erfindungsgemäßen Verfahrens ausführt, wenn sich das Endgerät 1 beim IMS deregistriert. In diesem Fall deregistriert sich die S-CSCF-Einrichtung 2 bei der IP-SM-GW-Einrichtung 3 in Schritt 800. Die IP-SM-GW-Einrichtung 3 informiert die HSS-Einrichtung 4 mit einer "MAP Any Time Modification"-Nachricht über die Deregistrierung in Schritt 801. Die HSS-Einrichtung 4 antwortet der IP-SM-GW-Einrichtung 3 mit einer "MAP ATM ack"-Nachricht in Schritt 802. Daraufhin sendet die IP-SM-GW-Einrichtung 3 eine OK-Nachricht an die S-CSCF-Einrichtung 2.

In Schritt 804 deaktiviert die IP-SM-GW-Einrichtung die dynamischen anfänglichen Filterkriterien durch eine "Sh Update"-Nachricht, um so zu erreichen, dass die IP-SM-GW-Einrichtung 3 nicht länger informiert wird, wenn das Endgerät wieder erreichbar wird. In Schritt 805 aktualisiert die HSS-Einrichtung 4 über eine "Cx Push"-Nachricht die anfänglichen Filterkriterien auf der S-CSCF-Einrichtung 2.

Fig. 9 zeigt eine Ausführungsform der erfindungsgemäßen S-CSCF-Einrichtung 2. Erfindungsgemäß umfasst die S-CSCF-Einrichtung Mittel zum Registrieren mindestens eines Nutzeridentifikators 900, der ein Endgerät identifiziert. Weiterhin umfasst die S-CSCF-Einrichtung Mittel zum Registrieren der S-CSCF-Einrichtung bei einer IP-SM-GW-Einrichtung 901.

Darüber hinaus umfasst die S-CSCF-Einrichtung 2 Mittel zum Empfangen einer Kurznachricht 902 und Mittel zum Weiterleiten der Kurznachricht von der S-CSCF-Einrichtung an das Endgerät 903.

Die gezeigte Ausführungsform umfasst zusätzlich Mittel zum Senden von Daten 904, die eine nicht erfolgreiche Auslieferung einer Kurznachricht an das Endgerät anzeigen ("Nicht OK"-Daten).

Darüber hinaus umfasst die gezeigte Ausführungsform Mittel zum Empfangen einer Anfrage 905, eine Überwachung einer Erreichbarkeit eines Endgeräts zu aktivieren, und Mittel zum Senden von ersten Daten 906, die anzeigen, dass das Endgerät wieder erreichbar ist (Erreichbarkeitsdaten).

Die S-CSCF-Einrichtung 2 umfasst weiterhin Mittel zum Empfangen einer Anfrage 907, die Überwachung der Erreichbarkeit eines Endgeräts zu deaktivieren (Überwachungs-Deaktivierungs-Anfrage) und Mittel zum Deregistrieren 908 der S-CSCF-Einrichtung bei der IP-SM-GW-Einrichtung.

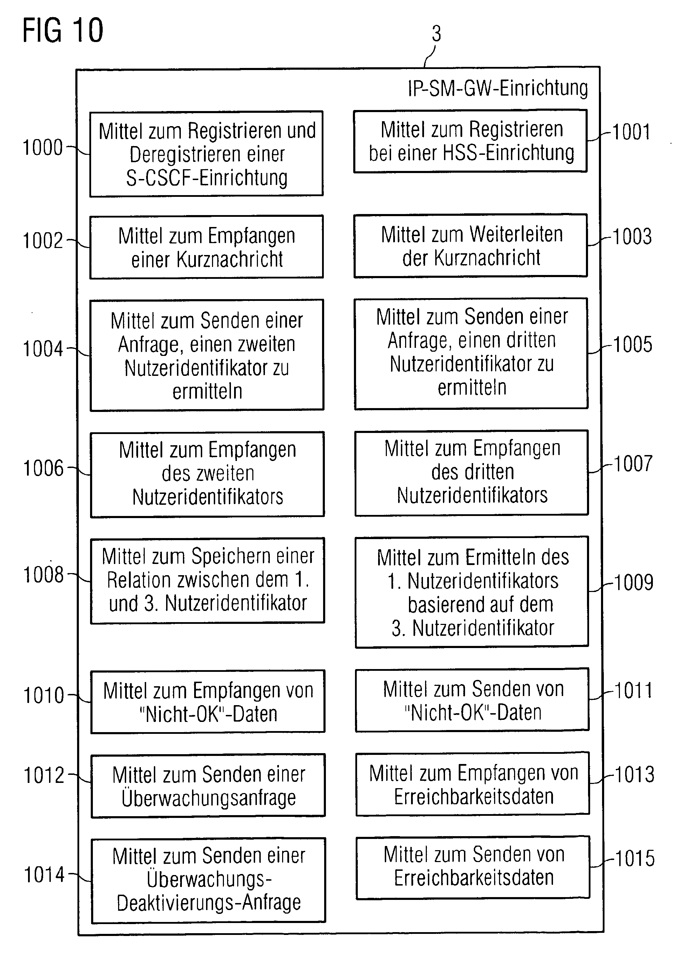

Fig. 10 zeigt eine Ausführungsform einer erfindungsgemäßen IP-SM-GW-Einrichtung 3. Die gezeigte Ausführungsform der IP-SM-GW-Einrichtung 3 umfasst Mittel zum Registrieren und Deregistrieren einer S-CSCF-Einrichtung bei der IP-SM-GW-Einrichtung 1000, Mittel zum Registrieren der IP-SM-GW-Einrichtung 3 bei einer HSS-Einrichtung 1001, Mittel zum Empfangen einer Kurznachricht 1002, Mittel zum Weiterleiten der Kurznachricht von der IP-SM-GW-Einrichtung an die S-CSCF-Einrichtung 1003, Mittel zum Senden einer Anfrage, einen zweiten Nutzeridentifikator zu ermitteln 1004, Mittel zum Senden einer Anfrage, einen dritten Nutzeridentifikator zu ermitteln 1005, Mittel zum Empfangen des zweiten Nutzeridentifikators 1006, Mittel zum Empfangen des dritten Nutzeridentifikators 1007, Mittel zum Speichern einer Relation zwischen dem ersten und dem dritten Nutzeridentifikator 1008 und Mittel zum Ermitteln des ersten Nutzeridentifikators, basierend auf dem dritten Nutzeridentifikator und der Relation zwischen dem ersten und dem dritten Nutzeridentifikator 1009.

Weiterhin umfasst die gezeigte Ausführungsform der IP-SM-GW-Einrichtung 3 Mittel zum Empfangen von Daten, die eine nicht erfolgreiche Auslieferung einer Kurznachricht an das Endgerät anzeigen ("Nicht OK"-Daten) 1010 und Mittel zum Senden von Daten, die eine nicht erfolgreiche Auslieferung einer Kurznachricht an das Endgerät anzeigen, von der IP-SM-GW-Einrichtung an die SC-Einrichtung 1011.

Darüber hinaus umfasst die gezeigte Ausführungsform Mittel zum Senden einer Anfrage, eine Überwachung der Erreichbarkeit des Endgeräts zu aktivieren 1012, Mittel zum Empfangen von ersten Daten, die anzeigen, dass das Endgerät erreichbar ist 1013, Mittel zum Senden einer Anfrage, die Überwachung der Erreichbarkeit eines Endgeräts zu deaktivieren 1014 und Mittel zum Senden von zweiten Daten, die anzeigen, dass das Endgerät erreichbar ist 1015 von der IP-SM-GW-Einrichtung an die HSS-Einrichtung.

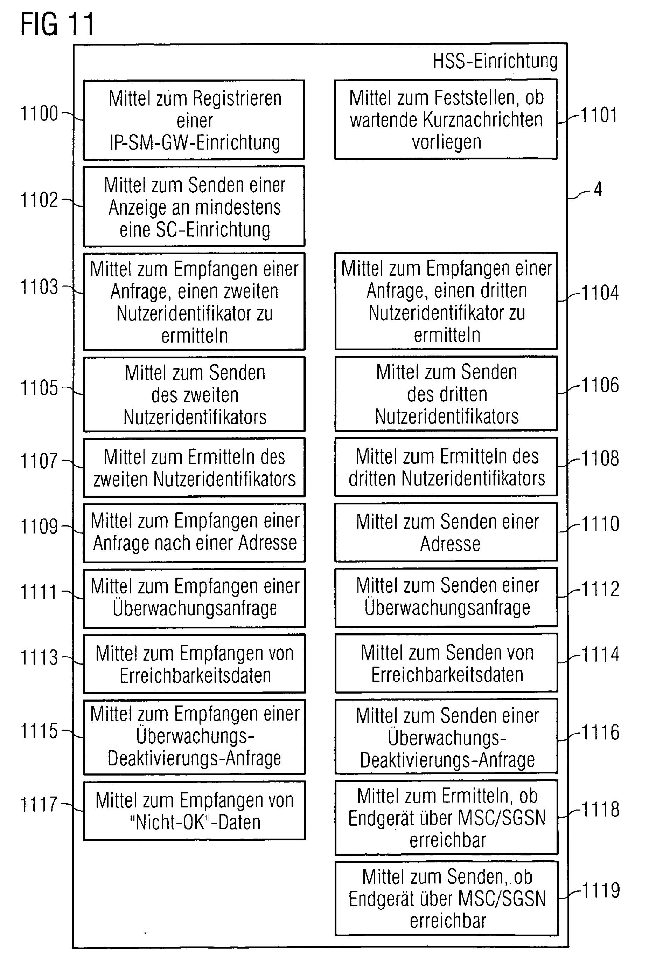

Fig. 11 zeigt eine Ausführungsform einer erfindungsgemäßen HSS-Einrichtung 4. Die gezeigte Ausführungsform umfasst Mittel zum Registrieren, dass ein Endgerät über eine IP-SM-GW-Einrichtung erreichbar ist 1100, Mittel zum Feststellen, ob eine Kurznachricht, die an den mindestens einen Nutzeridentifikator adressiert ist, der das Endgerät identifiziert, bereits im Netzwerk vorliegt 1101, Mittel zum Senden einer Anzeige an die mindestens eine SC-Einrichtung, wenn eine Kurznachricht, die an den mindestens einen Nutzeridentifikator adressiert ist, bereits im Netzwerk vorliegt 1102, Mittel zum Empfangen einer Anfrage, einen zweiten Nutzeridentifikator zu ermitteln 1103, Mittel zum Senden des zweiten Nutzeridentifikators von der HSS-Einrichtung an die IP-SM-GW-Einrichtung 1105, Mittel zum Empfangen einer Anfrage, einen dritten Nutzeridentifikator zu ermitteln 1104 und Mittel zum Senden des dritten Nutzeridentifikators von der HSS-Einrichtung an die IP-SM-GW-Einrichtung 1106.

Weiterhin umfasst die gezeigte Ausführungsform der HSS-Einrichtung 4 Mittel zum Ermitteln des zweiten Nutzeridentifikators 1107, Mittel zum Ermitteln des dritten Nutzeridentifikators 1108, Mittel zum Empfangen einer Anfrage nach einer Adresse, an welche eine SC-Einrichtung eine Kurznachricht weiterleiten soll 1109 und Mittel zum Senden der erfragten Adresse von der HSS-Einrichtung an die SC-Einrichtung 1110.

Zusätzlich umfasst die gezeigte Ausführungsform der HSS-Einrichtung Mittel zum Empfangen einer Anfrage, eine Überwachung der Erreichbarkeit des Endgeräts zu aktivieren 1111, Mittel zum Senden einer Anfrage, eine Überwachung einer Erreichbarkeit eines Endgeräts zu aktivieren 1112, Mittel zum Empfangen von zweiten Daten, die anzeigen, dass das Endgerät erreichbar ist 1113, Mittel zum Senden von Daten, die anzeigen, dass das Endgerät erreichbar ist 1114, Mittel zum Empfangen einer Anfrage, die Überwachung der Erreichbarkeit eines Endgeräts zu deaktivieren 1115, Mittel zum Senden einer Anfrage, die Überwachung der Erreichbarkeit eines Endgeräts zu deaktivieren 1116, Mittel zum Empfangen von Daten, die eine nicht erfolgreiche Auslieferung einer Kurznachricht an das Endgerät anzeigen 1117, Mittel zum Ermitteln, ob ein Endgerät erreichbar ist über eine MSC-Einrichtung und/oder eine SGSN-Einrichtung 1118 und Mittel zum Senden von Daten, die anzeigen, dass das Endgerät über eine MSC-Einrichtung und/oder eine SGSN-Einrichtung erreichbar ist.

Die Ausführungsbeispiele und Zeichnungen sind rein illustrativ und nicht beschränkend aufzufassen. Es ist möglich, die in den Ausführungsbeispielen beschriebenen Merkmale in abweichender Weise miteinander zu kombinieren, um auf diese Weise weitere Ausführungsbeispiele bereitzustellen, die für den entsprechenden Anwendungszweck optimiert sind. Soweit derartige Modifikationen für den Fachmann ohne weiteres ersichtlich sind, sollen sie durch die obige Beschreibung der Ausführungsbeispiele implizit offenbart sein.

Beispielsweise ist es natürlich möglich, die Überprüfung, ob wartende Kurznachrichten für das registrierte Endgerät vorliegen (Schritt 407) mit dem Erfragen der MSISDN und der IMSI beim HSS (Schritte 504 - 507) zu kombinieren. Eine solche Kombination von Merkmalen ist offensichtlich für den Fachmann und soll daher als implizit offenbart gelten.

## Patentansprüche

1. Verfahren für die Übertragung einer Kurznachricht über ein Netzwerk, wobei das Netzwerk umfasst:
- ein Endgerät (1) für das Senden und Empfangen einer Kurznachricht, wobei das Endgerät durch mindestens einen Nutzeridentifikator identifiziert wird, welcher sich auf einen Nutzer bezieht, der das Endgerät benutzt,
- eine S-CSCF-Einrichtung (2) zum Empfangen und Weiterleiten einer Kurznachricht,
- mindestens eine SC-Einrichtung (5) zum Empfangen und Weiterleiten einer Kurznachricht,
- eine IP-SM-GW-Einrichtung (3) zum Weiterleiten einer Kurznachricht von der SC-Einrichtung an die S-CSCF-Einrichtung und/oder zum Weiterleiten einer Kurznachricht von der S-CSCF-Einrichtung an die SC-Einrichtung,
- eine HSS-Einrichtung (4), zum Registrieren von Kommunikationsendpunkten und zum Feststellen eines Kommunikationsendpunkts für die Weiterleitung einer Kurznachricht,
wobei das Verfahren die Schritte umfasst:
- Registrieren des mindestens einen Nutzeridentifikators (401, 501), der das Endgerät identifiziert, bei der S-CSCF-Einrichtung,
- Registrieren der S-CSCF-Einrichtung bei der IP-SM-GW-Einrichtung (403, 503), um der IP-SM-GW-Einrichtung zu ermöglichen, Kurznachrichten an das Endgerät zu liefern, das durch den mindestens einen Nutzeridentifikator identifiziert wird, der bei der S-CSCF-Einrichtung registriert ist,
- Registrieren bei der HSS-Einrichtung (405), dass das Endgerät, das durch den mindestens einen Nutzeridentifikator identifiziert ist, über die IP-SM-GW-Einrichtung erreichbar ist,
- Erhalten einer Kurznachricht (510) auf der SC-Einrichtung,
- Weiterleiten der Kurznachricht von der SC-Einrichtung an die IP-SM-GW-Einrichtung (513),
- Weiterleiten der Kurznachricht von der IP-SM-GW-Einrichtung an die S-CSCF-Einrichtung (516) und
- Weiterleiten der Kurznachricht von der S-CSCF-Einrichtung an das Endgerät (517).

2. Verfahren nach Anspruch 1, **gekennzeichnet durch** die Schritte
- Feststellen (407), ob eine Kurznachricht, die an den mindestens einen Nutzeridentifikator adressiert ist, bereits im Netzwerk vorliegt, sobald bei der HSS-Einrichtung registriert wird, dass das Endgerät, das **durch** den mindestens einen Nutzeridentifikator identifiziert wird, über die IP-SM-GW-Einrichtung erreichbar ist, und
- Senden einer Anzeige (408) an die mindestens eine SC-Einrichtung, wenn eine Kurznachricht, die an den mindestens einen Nutzeridentifikator adressiert ist, bereits im Netzwerk vorliegt.

3. Verfahren nach Anspruch 1 oder 2, **gekennzeichnet durch** die Schritte
- Senden einer Anfrage, einen zweiten Nutzeridentifikator, der das Endgerät identifiziert, zu ermitteln (504), basierend auf einem ersten Nutzeridentifikator, der das Endgerät identifiziert, von der IP-SM-GW-Einrichtung an die HSS-Einrichtung,
- Ermitteln des zweiten Nutzeridentifikators, basierend auf dem ersten Nutzeridentifikator auf der HSS-Einrichtung, und
- Senden des zweiten Nutzeridentifikators von der HSS-Einrichtung an die IP-SM-GW-Einrichtung (505).

4. Verfahren nach zumindest einem der vorhergehenden Ansprüche, **gekennzeichnet durch** die Schritte
- Senden einer Anfrage, einen dritten Nutzeridentifikator zu ermitteln (506), der das Endgerät identifiziert, basierend auf dem zweiten Nutzeridentifikator, der das Endgerät identifiziert, von der IP-SM-GW-Einrichtung an die HSS-Einrichtung,
- Ermitteln des dritten Nutzeridentifikators, basierend auf dem zweiten Nutzeridentifikator auf der HSS-Einrichtung, und
- Senden des dritten Nutzeridentifikators von der HSS-Einrichtung an die IP-SM-GW-Einrichtung (507).

5. Verfahren nach zumindest einem der vorhergehenden Ansprüche, **gekennzeichnet durch** den Schritt Speichern einer Relation zwischen dem ersten und dem dritten Nutzeridentifikator auf der IP-SM-GW-Einrichtung (509).

6. Verfahren nach zumindest einem der vorhergehenden Ansprüche, **gekennzeichnet durch** die Schritte
- Empfangen einer Kurznachricht auf einer SC-Einrichtung (510),
- Senden einer Anfrage, eine Adresse zu empfangen, an welche die Kurznachricht weitergeleitet werden soll, um so die Kurznachricht an das Endgerät auszuliefern, von der SC-Einrichtung an die HSS-Einrichtung (511),
- Senden der erfragten Adresse von der HSS-Einrichtung an die SC-Einrichtung (512) in Reaktion auf die Anfrage und
- Weiterleiten der Kurznachricht von der SC-Einrichtung an die erfragte Adresse (513).

7. Verfahren nach zumindest einem der vorhergehenden Ansprüche, **gekennzeichnet durch** die Schritte
- Empfangen einer Kurznachricht, die an den dritten Nutzeridentifikator adressiert ist, der das Endgerät identifiziert, auf der IP-SM-GW-Einrichtung (513),
- Ermitteln des ersten Nutzeridentifikators (515), der das Endgerät identifiziert, basierend auf dem dritten Nutzeridentifikator und der Relation zwischen dem ersten und dem dritten Nutzeridentifikator auf der IP-SM-GW-Einrichtung und
- Weiterleiten der Kurznachricht und des ersten Nutzeridentifikators von der IP-SM-GW-Einrichtung an die S-CSCF-Einrichtung (516).

8. Verfahren nach zumindest einem der vorhergehenden Ansprüche, **gekennzeichnet durch** den Schritt Senden von Daten, die eine nicht erfolgreiche Auslieferung einer Kurznachricht an das Endgerät anzeigen, von der S-CSCF-Einrichtung an die IP-SM-GW-Einrichtung (601, 701).

9. Verfahren nach zumindest einem der vorhergehenden Ansprüche, **gekennzeichnet durch** den Schritt Senden von Daten, die eine nicht erfolgreiche Auslieferung einer Kurznachricht an das Endgerät anzeigen, von der IP-SM-GW-Einrichtung an die SC-Einrichtung (602, 702).

10. Verfahren nach zumindest einem der vorhergehenden Ansprüche, **gekennzeichnet durch** den Schritt Senden einer Anfrage, eine Überwachung der Erreichbarkeit des Endgeräts, das **durch** den mindestens einen Nutzeridentifikator identifiziert wird, zu aktivieren, von der IP-SM-GW-Einrichtung an die HSS-Einrichtung (603).

11. Verfahren nach zumindest einem der vorhergehenden Ansprüche, **gekennzeichnet durch** den Schritt Senden einer Anfrage, eine Überwachung einer Erreichbarkeit eines Endgeräts, das **durch** den mindestens einen Nutzeridentifikator identifiziert wird, zu aktivieren von der HSS-Einrichtung an die S-CSCF-Einrichtung (604).

12. Verfahren nach zumindest einem der vorhergehenden Ansprüche, **gekennzeichnet durch** den Schritt Senden von ersten Daten, die anzeigen, dass das Endgerät, das **durch** den mindestens einen Nutzeridentifikator identifiziert wird, erreichbar ist, wenn das Endgerät, das **durch** den mindestens einen Nutzeridentifikator identifiziert wird, erreichbar wird, von der S-CSCF-Einrichtung an die IP-SM-GW-Einrichtung (605).

13. Verfahren nach Anspruch 12, **gekennzeichnet durch** den Schritt Senden von zweiten Daten, die anzeigen, dass das Endgerät, das **durch** den mindestens einen Nutzeridentifikator identifiziert wird, erreichbar ist, von der IP-SM-GW-Einrichtung an die HSS-Einrichtung (606), beim Empfangen der ersten Daten auf der IP-SM-GW-Einrichtung.

14. Verfahren nach Anspruch 13, **gekennzeichnet durch** den Schritt Senden von Daten, die anzeigen, dass das Endgerät, das **durch** den mindestens einen Nutzeridentifikator identifiziert wird, erreichbar ist, von der HSS-Einrichtung an die mindestens eine SC-Einrichtung (607), beim Empfangen der zweiten Daten auf der HSS-Einrichtung.

15. Verfahren nach zumindest einem der vorhergehenden Ansprüche, **gekennzeichnet durch** den Schritt Senden einer Anfrage, die Überwachung der Erreichbarkeit eines Endgeräts, das **durch** den mindestens einen Nutzeridentifikator identifiziert wird, zu deaktivieren von der IP-SM-GW-Einrichtung an die HSS-Einrichtung (804).

16. Verfahren nach zumindest einem der vorhergehenden Ansprüche, **gekennzeichnet durch** den Schritt Senden einer Anfrage, die Überwachung der Erreichbarkeit eines Endgeräts, das **durch** den mindestens einen Nutzeridentifikator identifiziert wird, zu deaktivieren von der HSS-Einrichtung an die S-CSCF-Einrichtung (805).

17. Verfahren nach zumindest einem der vorhergehenden Ansprüche, **gekennzeichnet durch** den Schritt Senden von Daten, die eine nicht erfolgreiche Auslieferung einer Kurznachricht an das Endgerät, das **durch** den mindestens einen Nutzeridentifikator identifiziert wird, anzeigen, von der SC-Einrichtung an die HSS-Einrichtung (703).

18. Verfahren nach zumindest einem der vorhergehenden Ansprüche, **gekennzeichnet durch** den Schritt Ermitteln bei Empfang der Daten, die eine nicht erfolgreiche Auslieferung anzeigen, auf der HSS-Einrichtung, ob ein Endgerät, das **durch** den mindestens einen Nutzeridentifikator identifiziert wird, erreichbar ist über eine MSC-Einrichtung und/oder eine SGSN-Einrichtung (705).

19. Verfahren nach zumindest einem der vorhergehenden Ansprüche, **gekennzeichnet durch** den Schritt Senden von Daten, die anzeigen, dass das Endgerät, das **durch** den mindestens einen Nutzeridentifikator identifiziert wird, über eine MSC-Einrichtung und/oder eine SGSN-Einrichtung erreichbar ist, von der HSS-Einrichtung an die mindestens eine SC-Einrichtung (706), wenn das Endgerät erreichbar ist über eine MSC-Einrichtung und/oder eine SGSN-Einrichtung.

20. Verfahren nach zumindest einem der vorhergehenden Ansprüche, **gekennzeichnet durch** die Schritte
- Deregistrieren der S-CSCF-Einrichtung bei der IP-SM-GW-Einrichtung (800),
- Senden einer Anfrage, die Überwachung der Erreichbarkeit eines Endgeräts, das **durch** den mindestens einen Nutzeridentifikator identifiziert wird, zu deaktivieren von der IP-SM-GW-Einrichtung an die HSS-Einrichtung (804) und
- Senden einer Anfrage, die Überwachung der Erreichbarkeit eines Endgeräts, das **durch** den mindestens einen Nutzeridentifikator identifiziert wird, zu deaktivieren von der HSS-Einrichtung an die S-CSCF-Einrichtung (805).

21. S-CSCF-Einrichtung zum Empfangen und Weiterleiten einer Kurznachricht, umfassend
- Mittel zum Registrieren mindestens eines Nutzeridentifikators, der ein Endgerät identifiziert (900),
- Mittel zum Registrieren der S-CSCF-Einrichtung bei einer IP-SM-GW-Einrichtung (901), um der IP-SM-GW-Einrichtung zu ermöglichen, Kurznachrichten an ein Endgerät zu liefern, das durch den mindestens einen Nutzeridentifikator identifiziert wird, der bei der S-CSCF-Einrichtung registriert ist,
- Mittel zum Empfangen einer Kurznachricht (902) und
- Mittel zum Weiterleiten der Kurznachricht (903) von der S-CSCF-Einrichtung an das Endgerät.

22. S-CSCF-Einrichtung nach Anspruch 21, **gekennzeichnet durch** Mittel zum Senden von Daten, die eine nicht erfolgreiche Auslieferung einer Kurznachricht an das Endgerät anzeigen, von der S-CSCF-Einrichtung an die IP-SM-GW-Einrichtung (904).

23. S-CSCF-Einrichtung nach Anspruch 21 oder 22 , **gekennzeichnet durch** Mittel zum Empfangen einer Anfrage, eine Überwachung einer Erreichbarkeit eines Endgeräts, das **durch** den mindestens einen Nutzeridentifikator identifiziert wird, zu aktivieren (905).

24. S-CSCF-Einrichtung nach zumindest einem der Ansprüche 21 bis 23, **gekennzeichnet durch** Mittel zum Senden von ersten Daten, die anzeigen, dass das Endgerät, das **durch** den mindestens einen Nutzeridentifikator identifiziert wird, erreichbar ist, wenn das Endgerät, das **durch** den mindestens einen Nutzeridentifikator identifiziert wird, erreichbar wird, von der S-CSCF-Einrichtung an die IP-SM-GW-Einrichtung (906).

25. S-CSCF-Einrichtung nach zumindest einem der Ansprüche 21 bis 24, **gekennzeichnet durch** Mittel zum Empfangen einer Anfrage, die Überwachung der Erreichbarkeit eines Endgeräts, das **durch** den mindestens einen Nutzeridentifikator identifiziert wird, zu deaktivieren (907).

26. S-CSCF-Einrichtung nach zumindest einem der Ansprüche 21 bis 25, **gekennzeichnet durch** Mittel zum Deregistrieren der S-CSCF-Einrichtung bei der IP-SM-GW-Einrichtung (908).

27. IP-SM-GW-Einrichtung zum Weiterleiten einer Kurznachricht von einer SC-Einrichtung an eine S-CSCF-Einrichtung und/oder zum Weiterleiten einer Kurznachricht von der S-CSCF-Einrichtung an die SC-Einrichtung, umfassend
- Mittel zum Registrieren der S-CSCF-Einrichtung bei der IP-SM-GW-Einrichtung (1000), um der IP-SM-GW-Einrichtung zu ermöglichen, Kurznachrichten an ein Endgerät zu liefern, das durch mindestens einen Nutzeridentifikator identifiziert wird, der bei der S-CSCF-Einrichtung registriert ist,
- Mittel zum Registrieren bei einer HSS-Einrichtung (1001), dass das Endgerät, das durch den mindestens einen Nutzeridentifikator identifiziert ist, über die IP-SM-GW-Einrichtung erreichbar ist,
- Mittel zum Empfangen einer Kurznachricht (1002) und
- Mittel zum Weiterleiten der Kurznachricht von der IP-SM-GW-Einrichtung an die S-CSCF-Einrichtung (1003).

28. IP-SM-GW-Einrichtung nach Anspruch 27, **gekennzeichnet durch**
- Mittel zum Senden einer Anfrage, einen zweiten Nutzeridentifikator, der das Endgerät identifiziert, zu ermitteln (1004), basierend auf einem ersten Nutzeridentifikator, der das Endgerät identifiziert, von der IP-SM-GW-Einrichtung an die HSS-Einrichtung, und
- Mittel zum Empfangen des zweiten Nutzeridentifikators von der HSS-Einrichtung (1006).

29. IP-SM-GW-Einrichtung nach Anspruch 27 oder 28, **gekennzeichnet durch**
- Mittel zum Senden einer Anfrage, einen dritten Nutzeridentifikator zu ermitteln (1005), der das Endgerät identifiziert, basierend auf dem zweiten Nutzeridentifikator, der das Endgerät identifiziert, von der IP-SM-GW-Einrichtung an die HSS-Einrichtung, und
- Mittel zum Empfangen des dritten Nutzeridentifikators von der HSS-Einrichtung (1007).

30. IP-SM-GW-Einrichtung nach zumindest einem der Ansprüche 27 bis 29, **gekennzeichnet durch** Mittel zum Speichern einer Relation zwischen dem ersten und dem dritten Nutzeridentifikator (1008).

31. IP-SM-GW-Einrichtung nach zumindest einem der Ansprüche 27 bis 30, **gekennzeichnet durch**
- Mittel zum Empfangen einer Kurznachricht (1002), die an den dritten Nutzeridentifikator adressiert ist, der das Endgerät identifiziert,
- Mittel zum Ermitteln des ersten Nutzeridentifikators (1009), der das Endgerät identifiziert, basierend auf dem dritten Nutzeridentifikator und der Relation zwischen dem ersten und dem dritten Nutzeridentifikator und
- Mittel zum Weiterleiten der Kurznachricht (1003) und des ersten Nutzeridentifikators von der IP-SM-GW-Einrichtung an die S-CSCF-Einrichtung.

32. IP-SM-GW-Einrichtung nach zumindest einem der Ansprüche 27 bis 31, **gekennzeichnet durch** Mittel zum Empfangen von Daten, die eine nicht erfolgreiche Auslieferung einer Kurznachricht an das Endgerät anzeigen, von der S-CSCF-Einrichtung (1010).

33. IP-SM-GW-Einrichtung nach zumindest einem der Ansprüche 27 bis 32, **gekennzeichnet durch** Mittel zum Senden von Daten, die eine nicht erfolgreiche Auslieferung einer Kurznachricht an das Endgerät anzeigen, von der IP-SM-GW-Einrichtung an die SC-Einrichtung (1011).

34. IP-SM-GW-Einrichtung nach zumindest einem der Ansprüche 27 bis 33, **gekennzeichnet durch** Mittel zum Senden einer Anfrage, eine Überwachung der Erreichbarkeit des Endgeräts, das **durch** den mindestens einen Nutzeridentifikator identifiziert wird, zu aktivieren, von der IP-SM-GW-Einrichtung an die HSS-Einrichtung (1012) .

35. IP-SM-GW-Einrichtung nach zumindest einem der Ansprüche 27 bis 34, **gekennzeichnet durch** Mittel zum Empfangen von ersten Daten, die anzeigen, dass das Endgerät, das **durch** den mindestens einen Nutzeridentifikator identifiziert wird, erreichbar ist, von der S-CSCF-Einrichtung (1013).

36. IP-SM-GW-Einrichtung nach zumindest einem der Ansprüche 27 bis 35, **gekennzeichnet durch** Mittel zum Senden von zweiten Daten, die anzeigen, dass das Endgerät, das **durch** den mindestens einen Nutzeridentifikator identifiziert wird, erreichbar ist (1015), von der IP-SM-GW-Einrichtung an die HSS-Einrichtung, beim Empfangen der ersten Daten auf der IP-SM-GW-Einrichtung.

37. IP-SM-GW-Einrichtung nach zumindest einem der Ansprüche 27 bis 36, **gekennzeichnet durch** Mittel zum Senden einer Anfrage, die Überwachung der Erreichbarkeit eines Endgeräts, das **durch** den mindestens einen Nutzeridentifikator identifiziert wird, zu deaktivieren (1014) von der IP-SM-GW-Einrichtung an die HSS-Einrichtung.

38. IP-SM-GW-Einrichtung nach zumindest einem der Ansprüche 27 bis 37, **gekennzeichnet durch** Mittel zum Deregistrieren der S-CSCF-Einrichtung bei der IP-SM-GW-Einrichtung (1000).

39. HSS-Einrichtung zum Registrieren von Kommunikationsendpunkten und zum Feststellen eines Kommunikationsendpunkts für die Weiterleitung einer Kurznachricht, umfassend Mittel zum Registrieren, dass ein Endgerät, das durch mindestens einen Nutzeridentifikator identifiziert ist, über eine IP-SM-GW-Einrichtung erreichbar ist (1100).

40. HSS-Einrichtung nach Anspruch 39, **gekennzeichnet durch**
- Mittel zum Feststellen, ob eine Kurznachricht, die an den mindestens einen Nutzeridentifikator adressiert ist, bereits im Netzwerk vorliegt (1101), sobald bei der HSS-Einrichtung registriert wird, dass das Endgerät, das **durch** den mindestens einen Nutzeridentifikator identifiziert wird, über die IP-SM-GW-Einrichtung erreichbar ist, und
- Mittel zum Senden einer Anzeige an die mindestens eine SC-Einrichtung (1102), wenn eine Kurznachricht, die an den mindestens einen Nutzeridentifikator adressiert ist, bereits im Netzwerk vorliegt.

41. HSS-Einrichtung nach Anspruch 39 oder 40, **gekennzeichnet durch**
- Mittel zum Empfangen einer Anfrage (1103), einen zweiten Nutzeridentifikator, der das Endgerät identifiziert, zu ermitteln, basierend auf einem ersten Nutzeridentifikator, der das Endgerät identifiziert, von der IP-SM-GW-Einrichtung,
- Mittel zum Ermitteln des zweiten Nutzeridentifikators, basierend auf dem ersten Nutzeridentifikator (1107) und
- Mittel zum Senden des zweiten Nutzeridentifikators (1105) von der HSS-Einrichtung an die IP-SM-GW-Einrichtung.

42. HSS-Einrichtung nach zumindest einem der Ansprüche 39 bis 41, **gekennzeichnet durch**
- Mittel zum Empfangen einer Anfrage, einen dritten Nutzeridentifikator zu ermitteln (1104), der das Endgerät identifiziert, basierend auf dem zweiten Nutzeridentifikator, der das Endgerät identifiziert, von der IP-SM-GW-Einrichtung,
- Mittel zum Ermitteln des dritten Nutzeridentifikators (1108), basierend auf dem zweiten Nutzeridentifikator und
- Mittel zum Senden des dritten Nutzeridentifikators von der HSS-Einrichtung an die IP-SM-GW-Einrichtung (1106) .

43. HSS-Einrichtung nach zumindest einem der Ansprüche 39 bis 42, **gekennzeichnet durch**
- Mittel zum Empfangen einer Anfrage nach einer Adresse (1109), an welche eine SC-Einrichtung eine Kurznachricht weiterleiten soll, um so die Kurznachricht an das Endgerät auszuliefern, und
- Mittel zum Senden der erfragten Adresse von der HSS-Einrichtung an die SC-Einrichtung (1110) in Reaktion auf die Anfrage.

44. HSS-Einrichtung nach zumindest einem der Ansprüche 39 bis 43, **gekennzeichnet durch** Mittel zum Empfangen einer Anfrage, eine Überwachung der Erreichbarkeit des Endgeräts, das **durch** den mindestens einen Nutzeridentifikator identifiziert wird, zu aktivieren (1111), von der IP-SM-GW-Einrichtung.

45. HSS-Einrichtung nach zumindest einem der Ansprüche 39 bis 44, **gekennzeichnet durch** Mittel zum Senden einer Anfrage, eine Überwachung einer Erreichbarkeit eines Endgeräts, das **durch** den mindestens einen Nutzeridentifikator identifiziert wird, zu aktivieren von der HSS-Einrichtung an die S-CSCF-Einrichtung (1112).

46. HSS-Einrichtung nach zumindest einem der Ansprüche 39 bis 45, **gekennzeichnet durch** Mittel zum Empfangen von zweiten Daten, die anzeigen, dass das Endgerät, das **durch** den mindestens einen Nutzeridentifikator identifiziert wird, erreichbar ist, von der IP-SM-GW-Einrichtung (1113).

47. HSS-Einrichtung nach zumindest einem der Ansprüche 39 bis 46, **gekennzeichnet durch** Mittel zum Senden von Daten, die anzeigen, dass das Endgerät, das **durch** den mindestens einen Nutzeridentifikator identifiziert wird, erreichbar ist, von der HSS-Einrichtung an die mindestens eine SC-Einrichtung (1114), beim Empfangen der zweiten Daten auf der HSS-Einrichtung.

48. HSS-Einrichtung nach zumindest einem der Ansprüche 39 bis 47, **gekennzeichnet durch** Mittel zum Empfangen einer Anfrage, die Überwachung der Erreichbarkeit eines Endgeräts, das **durch** den mindestens einen Nutzeridentifikator identifiziert wird, zu deaktivieren (1115), von der IP-SM-GW-Einrichtung.

49. HSS-Einrichtung nach zumindest einem der Ansprüche 39 bis 48, **gekennzeichnet durch** Mittel zum Senden einer Anfrage, die Überwachung der Erreichbarkeit eines Endgeräts, das **durch** den mindestens einen Nutzeridentifikator identifiziert wird, zu deaktivieren (1116), von der HSS-Einrichtung an die S-CSCF-Einrichtung.

50. HSS-Einrichtung nach zumindest einem der Ansprüche 39 bis 49, **gekennzeichnet durch** Mittel zum Empfangen von Daten, die eine nicht erfolgreiche Auslieferung einer Kurznachricht an das Endgerät, das **durch** den mindestens einen Nutzeridentifikator identifiziert wird, anzeigen, von der SC-Einrichtung (1117).

51. HSS-Einrichtung nach zumindest einem der Ansprüche 39 bis 50, **gekennzeichnet durch** Mittel zum Ermitteln bei Empfang der Daten, die eine nicht erfolgreiche Auslieferung anzeigen, ob ein Endgerät, das **durch** den mindestens einen Nutzeridentifikator identifiziert wird, erreichbar ist über eine MSC-Einrichtung und/oder eine SGSN-Einrichtung (1118).

52. HSS-Einrichtung nach zumindest einem der Ansprüche 39 bis 51, **gekennzeichnet durch** Mittel zum Senden von Daten, die anzeigen, dass das Endgerät, das **durch** den mindestens einen Nutzeridentifikator identifiziert wird, über eine MSC-Einrichtung und/oder eine SGSN-Einrichtung erreichbar ist, von der HSS-Einrichtung an die mindestens eine SC-Einrichtung (1119), wenn das Endgerät erreichbar ist über eine MSC-Einrichtung und/oder eine SGSN-Einrichtung.

53. System für die Übertragung einer Kurznachricht über ein Netzwerk, umfassend
- ein Endgerät (1) für das Senden und Empfangen einer Kurznachricht, wobei das Endgerät durch mindestens einen Nutzeridentifikator identifiziert wird, welcher sich auf einen Nutzer bezieht, der das Endgerät benutzt,
- eine S-CSCF-Einrichtung (2) nach zumindest einem der Ansprüche 21 bis 26,
- mindestens eine SC-Einrichtung (5) zum Empfangen und Weiterleiten einer Kurznachricht,
- eine IP-SM-GW-Einrichtung (3) nach zumindest einem der Ansprüche 27 bis 38 und
- eine HSS-Einrichtung (4) nach zumindest einem der Ansprüche 39 bis 52.

54. Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, so dass das Verfahren nach zumindest einem der Ansprüche 1 bis 20 ausgeführt oder zumindest eine Einrichtung gebildet wird aus einer Gruppe von Einrichtungen umfassend die S-CSCF-Einrichtung (2) nach zumindest einem der Ansprüche 21 bis 26, die IP-SM-GW-Einrichtung (3) nach zumindest einem der Ansprüche 27 bis 38 und die HSS-Einrichtung (4) nach zumindest einem der Ansprüche 39 bis 52.

55. Verfahren zur Kurznachrichtenzustellung,
**dadurch gekennzeichnet, dass**
bei Registrierung eines IP-SM-GW im HSS das HSS prüft, ob wartende Nachrichtendaten (="message waiting data") vorhanden sind,
wobei in diesem Fall ein oder mehrere Kurznachrichtenzentren (="Short Message Service Centres") alarmiert werden, und das HSS (oder HLR) die IMSI des Teilnehmers in der Nachricht "AnyTimeModification ack" zum IP-SM-GW sendet,
und dieses dann mit Hilfe der IMSI die eintreffende Kurznachricht dem Teilnehmer zuordnet.

56. Verfahren nach Anspruch 55,
**dadurch gekennzeichnet, dass** mit Hilfe der IMSI die eintreffende Kurznachricht dem Teilnehmer zugeordnet wird, ohne dass eine Korrelierungsnummer vergeben werden muss.

57. Verfahren nach einem der vorhergehenden Ansprüche 55 oder 56,
**dadurch gekennzeichnet, dass**
nach nicht erfolgreicher Zustellung der Kurznachricht über das IMS (Empfang der Nachricht ReportSM-DeliveryStatus) das HSS (genauer HLR) die Adresse des IP-SM-GW als nicht erreichbar markiert (Mobile Not Reachable via IMS) und (falls der Teilnehmer über MSC oder SGSN erreichbar ist) die Nachricht AlertServiceCentre zum SMS-GMSC sendet, damit die Zustellung der Kurznachricht über MSC oder SGSN angestoßen wird.

58. Verfahren nach Anspruch 57,
**dadurch gekennzeichnet, dass**
das IP-SM-GW dynamische Filter-Kriterien aktiviert, so dass eine Wiedererreichbarkeit des Teilnehmers über das IMS überwacht wird.

59. Verfahren nach zumindest einem der vorhergehenden Ansprüche 55 bis 58,
**dadurch gekennzeichnet, dass**
nach Feststellen der Wiedererreichbarkeit des Teilnehmers über das IMS mittels der aktivierten dynamischen Filter-Kriterien das IP-SM-GW die Nachricht ReadyForSM zum HSS (insbesondere HLR) sendet.

60. Verfahren nach Anspruch 59,
**dadurch gekennzeichnet, dass**
diese Nachricht einen Aktivierungsindikator beinhaltet, der bewirkt, dass die im HLR noch gespeicherte aber als nicht erreichbar markierte IP-SM-GW Adresse wieder als erreichbar markiert wird und dass das IP-SM-GW die dynamischen Filter-Kriterien deaktiviert.

61. Verfahren nach zumindest einem der vorhergehenden Ansprüche 55 bis 60,
**dadurch gekennzeichnet, dass**
wartende Short Message Service Centre alarmiert werden um mit der Zustellung von Kurznachrichten zu beginnen, wenn sich ein IP-SM-GW im HSS registriert.

62. Verfahren nach zumindest einem der vorhergehenden Ansprüche 55 bis 61,
**dadurch gekennzeichnet, dass**
dass aufgrund der in der Nachricht AnyTimeModification ack übertragenen IMSI keine Korrelierungsnummer vom IP-SM-GW vergeben wird, dass die Nachricht SendRoutingInfoForSM nicht vom HLR zum IP-SM-GW weitergeleitet wird und dass das IP-SM-GW selbst nicht die Nachricht SendRoutingInfoForSM zum HLR sendet.

63. Verfahren nach zumindest einem der vorhergehenden Ansprüche 55 bis 62,
**dadurch gekennzeichnet, dass**
nach nicht erfolgreicher Zustellung einer Kurznachricht über das IMS der existierende automatische Wiederholungsmechanismus im SMS-GMSC genutzt wird, um die Kurznachricht über MSC oder SGSN zuzustellen, und dass nach nicht erfolgreicher Zustellung der Kurznachricht über das IMS dieser Weg automatisch deaktiviert wird bis der Teilnehmer wieder über das IMS erreichbar ist.

64. Verfahren nach zumindest einem der vorhergehenden Ansprüche 55 bis 63,
**dadurch gekennzeichnet, dass**
mit Hilfe des in der Nachricht ReadyForSM übertragenen Aktivierungsindikators die Zustellung von Kurznachrichten über da IMS automatisch reaktiviert wird.

65. Vorrichtung zur Durchführung des Verfahrens nach einem der vorhergehenden Ansprüche 55 bis 64.
